(19) Europäisches Patentamt
European Patent Office
Office européen des brevets

(11) **EP 3 445 683 B1**

(12) **EUROPÄISCHE PATENTSCHRIFT**

(45) Veröffentlichungstag und Bekanntmachung des Hinweises auf die Patenterteilung:
**20.07.2022   Patentblatt 2022/29**

(21) Anmeldenummer: **17708708.7**

(22) Anmeldetag: **21.02.2017**

(51) Internationale Patentklassifikation (IPC):
**B65G 47/08** *(2006.01)*      **B65G 47/244** *(2006.01)*

(52) Gemeinsame Patentklassifikation (CPC):
**B65G 47/086; B65G 47/244**

(86) Internationale Anmeldenummer:
**PCT/EP2017/053838**

(87) Internationale Veröffentlichungsnummer:
**WO 2017/182162 (26.10.2017 Gazette 2017/43)**

(54) **VERFAHREN ZUM UMGANG MIT HINTEREINANDER BEWEGTEN STÜCKGÜTERN**

METHOD FOR DEALING WITH PIECE GOODS MOVED ONE AFTER ANOTHER

PROCÉDÉ POUR LA MANUTENTION DE MARCHANDISES DE DÉTAIL DÉPLACÉES LES UNES DERRIÈRE LES AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2016   DE 102016206650**

(43) Veröffentlichungstag der Anmeldung:
**27.02.2019   Patentblatt 2019/09**

(73) Patentinhaber: **Krones Aktiengesellschaft**
**93073 Neutraubling (DE)**

(72) Erfinder:
• **ASTNER, Michael**
**93073 Neutraubling (DE)**
• **BEER, Erhard**
**93073 Neutraubling (DE)**
• **KOLLMUSS, Manuel**
**93073 Neutraubling (DE)**
• **MEHDI, Arsalan**
**93073 Neutraubling (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
EP-A2- 2 246 277      WO-A1-2010/106529
WO-A2-2014/145412    DE-A1-102011 087 052
FR-A1- 2 993 870      JP-U- H 052 843

EP 3 445 683 B1

**Beschreibung**

Die vorliegende Erfindung betrifft ein Verfahren zum Umgang mit hintereinander bewegten Stückgütern mit den Merkmalen des unabhängigen Verfahrensanspruchs 1.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den Steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Das Dokument JP H052843 U beschreibt eine Arbeitsübergabevorrichtung zur Übertragen eines auf einer Palette abgelegten Werkstücks, wobei zwei Werkstücke gleichzeitig positioniert werden. Dabei werden der Abstand und der Winkel zwischen den Werkstücken verändert.

Das Dokument DE 102011087052 A1 offenbart eine Vorrichtung und ein Verfahren zur Handhabung von Gebinden. Es sind mindestens zwei in Gegenrichtung zueinander an gegenüber liegenden Seiten anbringbare Mittel zur Aufbringung einer annähernd senkrecht zur Längsachse der Artikel wirkenden Stellkraft zur Änderung der Gebindeordnung vorgesehen, insbesondere von einer Diagonalanordnung in eine Rechteckanordnung oder umgekehrt.

Das Dokument WO 2010/106529 A1 offenbart einen Greifkopf umfassend ein Trägerelement, das um eine erste Drehachse drehbar ist und dem zwei oder mehr Greifer schwenkbar zugeordnet sind.

Das Dokument EP 2246277 beschreibt eine Vorrichtung und ein Verfahren zum definierten Zusammenführen von Gebinden. Die Gebinde werden anschließend auf mindestens einem Abförderer der weiteren Verarbeitung bzw. Handhabung zugeführt.

Das Dokument WO 2014/145412 A2 offenbart ein System, ein Verfahren und einen Endeffektor, die der Verarbeitung von Artikeln dienen, die voneinander beabstandet innerhalb eines Stroms von Artikeln bewegt werden. Hierbei werden Artikel, die sich stromabwärts befinden verlangsamt, um größere Gruppierungen auszubilden.

Das Dokument FR 2993 870A1 beschreibt ein Verfahren nach dem Oberbegriff des Anspruchs 1 und eine Vorrichtung mit Einlasskanälen zur Aufnahme von aufeinanderfolgenden Objekten und mit Auslasskanälen zum Austragen der Objekte. Die Objekte werden zwischen den Einlasskanälen und den Auslasskanälen mit Hilfe eines Roboters bewegt.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung wird mit dem Gegenstand des unabhängigen Anspruchs 1, d.h. mit einem Verfahren zum Umgang mit hintereinander bewegten Stückgütern erreicht. Merkmale vorteilhafter Weiterbildungen der Erfindung ergeben sich aus den jeweiligen abhängigen Ansprüchen.

Die Erfindung bezieht sich auf ein Verfahren nach Anspruch 1 zum Umgang von Stückgütern, die insbesondere in mindestens einer Reihe hintereinander bewegt werden können, die jedenfalls hintereinander bewegt werden.

Unabhängig von der Abfolge der hintereinander transportierten Stückgüter werden diese normalerweise fluchtend hintereinander transportiert. Die hintereinander transportierten Stückgüter können wahlweise taktweise transportiert werden, bspw. in aufeinander folgenden Reihen von jeweils mehreren Stückgütern etc. Wenn also im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander und/oder taktweise hintereinander und/oder in unterschiedlichen Abständen zueinander bewegten Stückgütern gemeint. Wenn zudem im Zusammenhang der vorliegenden Beschreibung nur noch von einer Vorrichtung, einer Vorrichtungsvariante, der erfindungsgemäßen Vorrichtung o. dgl. die Rede ist, so ist damit generell die genannte Vorrichtung zum Umgang mit hintereinander bewegten Stückgütern gemeint. Wenn hier, in den Ausführungsbeispielen, in den Ansprüchen und/oder im Zusammenhang mit der gesamten Beschreibungsoffenbarung vorwiegend von einem Umgang mit Stückgütern die Rede ist, so umfasst dies gleichermaßen die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, der bzw. die in einem Erfassungsraum angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung, seien dies in Transport- und/oder Förderrichtung nachgeordnete, vorgeordnete oder integrierte Teile der erfindungsgemäßen Vorrichtung.

Bei den Stückgütern kann es sich um hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Stückgütern oder Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die hintereinander bewegten Stückgüter können dabei je nach Anforderung von nachfolgenden Handhabungsvorrichtungen gleich oder unterschiedlich ausgebildet sein.

Die bspw. in einer Reihe ohne Abstände voneinander bewegten und/oder zu einem - insbesondere Manipulationsbereich bzw. Erfassungsbereich genannten - Bereich beförderten, mindestens zwei unmittelbar aufeinanderfolgenden Stückgüter werden als geschlossene Formation transportiert . Mit dem Begriff der geschlossenen Formation wird eine lückenlose Aufeinanderfolge von Stückgütern gemeint , die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Aus dieser Formation bzw. geschlossenen Formation wird wenigstens ein transportiertes Stückgut klemmend und/oder kraftschlüssig und/oder formschlüssig erfasst, von der Formation räumlich abgetrennt und in eine definierte relative Zielposition und/oder Zielausrichtung gegenüber nachfolgenden Stückgütern der Formation gebracht.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Bei dem erfindungsgemäßen Verfahren ist vorgesehen, dass die hintereinander bewegten Stückgüter lückenlos und in geschlossener Formation zu dem Erfassungsbereich des Manipulators transportiert werden. In dem Erfassungsbereich wird ein transportiertes Stückgut oder eine Gruppe umfassend wenigstens zwei transportierte Stückgüter durch die Klemm- und/oder Greifmitteln des wenigstens einen Manipulators erfasst, von den nachfolgenden Stückgütern der geschlossenen Formation räumlich abgetrennt und in eine definierte relative Zielposition und/oder Zielausrichtung gegenüber den nachfolgenden Stückgütern der geschlossenen Formation gebracht.

Durch das eine von den mindestens zwei Klemm- und/oder Greifmitteln des wenigstens einen Manipulators erfasste Stückgut oder durch die erfasste Gruppe wird eine erste vertikale und in etwa senkrecht zu der Transportrichtung der Stückgüter orientierte Symmetrieebene definiert. Bei dem erfindungsgemäßen Verfahren und der Vorrichtung ist weiterhin vorgesehen, dass diese erste vertikale Symmetrieebene beabstandet ist von einer zweiten vertikalen Symmetrieebene, die durch den Manipulator bzw. durch dessen Klemm- und/oder Greifmittel definiert ist, was im vorliegenden Zusammenhang auch als sog. asynchrones Abgreifen bezeichnet wird bzw. werden kann. Unter Umständen kann innerhalb des Verfahrens, d.h. zwischen zwei oder mehr Verfahrensschritten, immer auch wieder eine Variante auftreten bzw. sinnvoll sein, bei der diese erwähnten Symmetrieebenen zusammenfallen oder nahezu zusammenfallen. Dieses nichtsynchrone Abgreifen wird jedoch meist nicht gesondert erwähnt, weil die vollständige und/oder symmetrische Beladung des Manipulators mit mehreren Stückgütern den Regelfall darstellt, auf den die meisten der im Zusammenhang der vorliegenden Beschreibung skizzierten Verfahrensaspekte zutreffen.

Mit der sog. asynchronen Beladung bzw. mit der sog. asynchronen Erfassung von Stückgütern bzw. zumindest eines Stückgutes kann insbesondere definiert sein, dass das eine vom Manipulator erfasste Stückgut nicht mittig bzw. symmetrisch zur vertikalen Mittel- und/oder Drehachse des Manipulators bzw. dessen Klemm- und/oder Greifmittel erfasst und positioniert ist, während es verschoben und/oder in Richtung der Zielposition gebracht wird, ggf. unter gleichzeitiger Rotation. Dies gilt gleichermaßen für zwei oder mehr erfasste Stückgüter, die in Zusammenschau ebenfalls außermittig bzw. unsymmetrisch im Manipulator geklemmt sein können.

Wenn im vorliegenden Zusammenhang von vertikalen Symmetrieebenen die Rede ist, die sich in erster Linie auf die Positionierungen der Stückgüter bzw. deren Relativpositionen zum Manipulator bzw. zu dessen Klemm- und/oder Greifmitteln beziehen, so sind diese vertikalen Symmetrieebenen definitionsgemäß senkrecht oder ungefähr senkrecht zur Horizontalförderebene orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung und/oder in etwa senkrecht zu einer Längserstreckungsrichtung der Formation bzw. der geschlossenen Formation orientiert. Sofern sich der Leser diese Transportrichtung als horizontalen Vektorpfeil vergegenwärtigt, der parallel zur horizontalen Auflageebene der Horizontalfördereinrichtung sowie parallel zur normalerweise ebenfalls horizontal oder abschnittsweise horizontal verlaufenden Transporteinrichtung verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter, die andere auf den Manipulator - in einem gewissen Abstand, sofern der Manipulator unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators vor.

Es sei an dieser Stelle ergänzend erwähnt, dass es sich bei den Stückgütern, auf die sich die erwähnte erste vertikale Symmetrieebenen bezieht, insbesondere um die jeweilige Gesamtheit von Stückgütern handeln kann, die sich in dem jeweils betreffenden Arbeitstakt im Manipulator bzw. zwischen dessen beiden Klemmbacken befinden. Diese Gesamtheit der Stückgüter kann somit ggf. auch durch das Gesamtvolumen und/oder den Masseschwerpunkt der insgesamt im Manipulator befindlichen und vom Manipulator erfassten Stückgüter charakterisiert werden, sofern dies im Einzelfall zweckmäßig ist. In entsprechender Weise handelt es sich bei der zweiten vertikalen Symmetrieebene, die dem Manipulator zugeordnet ist, sinnvollerweise um diejenige Symmetrieebene, die durch den Mittelpunkt der Gesamtheit an Stückgütern verläuft, wenn der Manipulator vollständig beladen bzw. entsprechend seiner maximalen Erfassungskapazität beladen ist, was normalerweise auch eine mittige, symmetrische und/oder gleichmäßige Beladung mit Stückgütern impliziert. Wenn im Zusammenhang der Lokalisierung der zweiten vertikalen Symmetrieebene von einem Mittelpunkt der Gesamtheit an Stückgütern die Rede ist, so kann dies je nach Ausgestaltung der Stückgüter bspw. der Massenschwerpunkt der Gesamtheit an im Manipulator erfassten Stückgütern oder auch der volumetrische Mittelpunkt dieser Gesamtheit an Stückgütern sein.

Darüber hinaus sei ergänzend klargestellt, dass die sich auf den Manipulator beziehende zweite Symmetrieebene gleichermaßen auf dessen gegeneinander zustellbare Klemmbacken bezogen sein kann, so dass von einer mittigen bzw. außermittigen Anordnung der Stückgüter bzw. der jeweiligen Gesamtheit an gleichzeitig zwischen den Klemmbacken erfassten Stückgütern die Rede sein kann, sofern die auf die Stückgüter bzw. die Gesamtheit an jeweils erfassten Stückgütern bezogene erste Symmetrieebene mit der zweiten Symmetrieebene zusammenfällt bzw. von dieser beabstandet ist.

Auf alle die zuvor erwähnten Varianten der symmetrischen bzw. unsymmetrischen Anordnung der Stückgüter und/oder der synchronen bzw. asynchronen Beladung des Manipulators mit Stückgütern bezogen sei an dieser Stelle zudem klargestellt, dass die sich auf den Manipulator bzw. auf dessen Klemm- und/oder Greifelemente beziehende zweite Symmetrieebene nicht zwingend durch eine in etwa vertikale Rotationsachse des Manipulators verlaufen muss, da der Manipulator nicht zwangsläufig rotationssymmetrisch ausgestaltet sein muss, sondern ggf. auch eine unsymmetrische Gestaltung aufweisen kann, sofern dies aus konstruktiven und/oder aus dynamikbezogenen Gründen zweckmäßig sein sollte.

Ein asymmetrisches Greifen oder Erfassen der Stückgüter im Manipulator kann bspw. auch dadurch charakterisiert sein, dass die Länge der insgesamt erfassten Stückgüter in Transportrichtung geringer ist als die Gesamtlänge der gegeneinander zustellbaren Greif- und/oder Klemmelemente des Manipulators, wenn dieser bei der Erfassung der Stückgüter so ausgerichtet ist, dass die Längserstreckungsrichtungen seiner Greif- und/oder Klemmelemente in etwa parallel zur Transportrichtung orientiert sind, und dass eine nicht belegte Länge der Greif- und/oder Klemmelemente des Manipulators an einer Stirnseite der Stückgüter größer oder kleiner ist als der gegenüberliegenden anderen Stirnseite. Dagegen stimmen diese nicht belegten Längenmaße bei symmetrischer Beladung des Manipulators ungefähr überein.

Bei dem Verfahren kann weiterhin vorgesehen sein, dass in mehreren zeitlich aufeinanderfolgenden Schritten jeweils wenigstens ein transportiertes Stückgut aus der geschlossenen Formation und/oder dem getakteten Zulauf klemmend und/oder formschlüssig und/oder kraftschlüssig erfasst, von der geschlossenen Formation jeweils räumlich abgetrennt und in eine jeweilige definierte relative Zielposition und/oder Zielausrichtung gegenüber nachfolgenden Stückgütern gebracht wird. Beispielsweise erfolgt das Abtrennen durch eine Distanzierung in Transportrichtung, ggf. durch zumindest kurzzeitige Beschleunigung mit einer Bewegungskomponente parallel zur geradlinigen Bewegungsbahn der geschlossenen Formation räumlich abgetrennt und in Richtung einer jeweils definierten relativen Zielposition und/oder Zielausrichtung gegenüber nachfolgenden Stückgütern. Dabei werden die entsprechenden Stückgüter in mehreren zeitlich aufeinanderfolgenden Schritten in ihre jeweilige Zielposition und/oder Zielausrichtung gebrachten, wobei ggf. eine Drehung der vom Manipulator erfassten Stückgüter erfolgen kann und somit beispielsweise eine palettierfähige Lage oder eine Vorgruppierung für eine palettierfähige Lage gebildet.

Aufgrund des häufig asynchron erfolgenden Abgreifens von Stückgütern aus der geschlossenen und/oder getakteten Formation der zum Erfassungsbereich geförderten Stückgutreihen können bestimmte sinnvolle Einschränkungen hinsichtlich der dem Abgreifen und Erfassen der Stückgüter aus der Formation unmittelbar folgenden Bewegungsabläufe des Manipulators definiert werden. Sofern der Greiferkopf des Manipulators in der beschriebenen unsymmetrischen Weise bzw. in sog. asynchroner Bestückung mit Stückgütern beladen ist, womit die Distanzierung der jeweiligen ersten bzw. zweiten Symmetrieebenen - dies sind die jeweiligen vertikalen Symmetrieebenen, die in etwa senkrecht zur Transportrichtung bzw. zur Längserstreckungsrichtung der Stückgutformation orientiert sind - gemeint ist, ist bei einer Verschiebung nach links bzw. nach rechts, der ggf. jeweils eine Rotation überlagert sein kann, nicht jede Rotationsrichtungsvariante sinnvoll durchführbar, da dies unter Umständen zu einem unnötig langen Verschiebeweg führen könnte, der vom Manipulator insgesamt auszuführen wäre.

Sofern der Greiferkopf des Manipulators unmittelbar nach Erfassung der Stückgüter, d.h. unmittelbar nach dem Abgreifen der zuvorderst transportierten Stückgüter von der geschlossenen oder getakteten Formation kurzzeitig in Transportrichtung beschleunigt wird, wodurch die abgegriffenen Stückgüter einen ausreichenden Sicherheitsabstand von den nachfolgenden Stückgütern der geschlossenen oder getakteten Formation erhalten, entsteht bei einer eingeleiteten Rotation kein Kollisionsrisiko zwischen dem Greiferkopf des Manipulators bzw. den darin geklemmten abgegriffenen Stückgütern und den nachfolgenden Stückgütern der geschlossenen oder getakteten Formation. Wird aus Gründen der schnelleren Positionierung im Einzelfall hingegen auf diese kurzzeitige Beschleunigung des Manipulators bzw. des Greiferkopfes verzichtet, ist die weitere Bewegungs- und insbesondere Drehrichtung unmittelbar nach dem Abgreifen nicht mehr beliebig zu wählen, sondern muss das drohende Kollisionsrisiko zwischen den schon erfassten Stückgütern bzw. dem Greiferkopf selbst und den nachfolgenden Stückgütern der Formation berücksichtigen. Bei einer Verbringung der erfassten Stückgüter zur rechten Seite einer durch die Transportrichtung und/oder die Längserstreckungsrichtung der Formation definierten vertikalen Trenn- oder Mittelebene führt der Manipulator bzw. der Greiferkopf sinnvollerweise eine rechtssinnige Rotation aus, sofern die Stückgüter nicht nur innerhalb des Erfassungsbereichs verschoben, sondern in überlagerter Drehung auch neu ausgerichtet werden sollen. Gleichermaßen führt der Manipulator bzw. der Greiferkopf bei einer Verbringung der erfassten Stückgüter zur linken Seite der durch die Transportrichtung und/oder die Längserstreckungsrichtung der Formation definierten vertikalen Trenn- oder Mittelebene eine linkssinnige Rotation aus, sofern die Stückgüter nicht nur innerhalb des Erfassungsbereichs verschoben, sondern in überlagerter Drehung auch neu ausgerichtet werden sollen.

Da solche Links- oder Rechtsdrehungen jedoch bei asynchron beladenem Greiferkopf oftmals zu insgesamt längeren Wegen führen, die vom Greiferkopf bzw. vom Manipulator zwischen dem Erfassungsort und dem Zielort bzw. der Zielausrichtung der verschobenen, positionierten und/oder gedrehten Stückgüter zurückgelegt werden müssen, kann es einerseits sinnvoller sein, einerseits die beschriebene kurzzeitige Beschleunigung des Greiferkopfes unmittelbar nach asynchroner Beladung mit Stückgütern auszuführen und andererseits je nach Bedarf eine Links- oder Rechtsdrehung durchzuführen, unabhängig von der Hauptrichtung der Verschiebung, Positionierung und/oder Neuausrichtung der Stückgüter, d.h., ob diese auf der linken Seite oder auf der rechten Seite der vertikalen Trenn- oder Mittelebene liegen soll. So kann es insbesondere bei einer Verschiebung nach links gegenüber der vertikalen Trenn- oder Mittelebene sinnvoll sein, den Greiferkopf bei einem vorgegebenen Rotationswinkel der erfassten Stückgüter von bspw. 90° gegenüber der ursprünglichen Transportrichtung der Formation im Interesse einer Verkürzung der zurückzulegenden Wege sinnvoll sein, diese 90°-Rotation in rechtssinniger Drehung auszuführen, was jedoch aufgrund der damit entstehenden Kollisionsgefahr zwischen den Stückgütern im Greiferkopf bzw. dem Greiferkopf selbst und den nachfolgenden Stückgütern der Formation die beschriebene kurzzeitige Beschleunigung nahezu unverzichtbar macht.

Diese beschriebene bevorzugte Drehrichtung wird besonders plausibel, wenn berücksichtigt wird, dass die asynchrone Beladung fast ausnahmslos die in Transportrichtung zuvorderst befindliche Aufnahmekapazität des Greiferkopfes bzw. des Manipulators ungenutzt lässt, während die in Transportrichtung nacheilenden Abschnittes des Greiferkopfes bzw. des Manipulators mit Stückgütern besetzt werden. Grundsätzlich kann zwar auch von diesem Regelfall abgewichen werden, doch dürften diese Ausnahmefälle in der Praxis selten vorkommen.

Alternativ oder zusätzlich werden aus den in zeitlich aufeinanderfolgenden Schritten in ihre jeweilige Zielposition und/oder Zielausrichtung gebrachten Stückgütern, insbesondere im Erfassungsbereich mindestens eines Manipulators der Vorrichtung zwei oder mehr weiterverarbeitbare und/oder einer Verpackungsstation zuführbare bzw. jeweils oder gemeinsam palettierfähige Reihen mit Stückgütern gebildet. Hierbei können einzelne, mehrere oder alle Stückgüter jeweils verdreht werden, insbesondere um jeweils einen Drehwinkel um eine Vertikale von 90°. Dieser Fall bildet jedoch nicht den Regelfall, sondern dürfte seltener auftreten, da er sich auf die nicht als Regelfall anzusehende Option bezieht, anstelle einer palettierfähigen Lage zwei Reihen oder mehr als zwei Reihen zu bilden, ggf. unter jeweiliger 90°-Drehung der Stückgüter. Dennoch kann dieser Fall in einigen Sondersituationen der Lagen- und/oder Reihenbildung eine sinnvolle Option darstellen.

Gemäß einer Ausführungsform der Erfindung werden zum Bilden der palettierfähigen Lage oder der Vorgruppierung für eine palettierfähige Lage bei wenigstens einem der zeitlich aufeinanderfolgenden Schritte zumindest näherungsweise zeitgleich wenigstens zwei Stückgüter erfasst. Diese wenigstens zwei Stückgüter werden hierauf folgend gemeinsam von der geschlossenen Formation räumlich abgetrennt und gemeinsam in ihre jeweilige definierte relative Zielposition und/oder Zielausrichtung gegenüber den nachfolgenden Stückgütern der Formation gebracht. Sofern der Greiferkopf des Manipulators bspw. drei Stückgüter gleichzeitig aufnehmen kann, bleibt bei einer asynchronen Beladung bzw. bei asynchronem Abgreifen in aller Regel der in Transportrichtung zuvorderst befindliche Raum für ein weiteres Stückgut frei und ungenutzt, was die oben beschriebenen bevorzugten Bewegungs- und Rotationsrichtungen des Manipulators bei der folgenden Positionierung und/oder Ausrichtung innerhalb des Erfassungsbereiches induziert.

Normalerweise bzw. relativ häufig werden zum Bilden der palettierfähigen Lage oder der Vorgruppierung für eine palettierfähige Lage bei wenigstens zwei oder mehr zeitlich aufeinanderfolgenden Schritten eine unterschiedliche Anzahl an Stückgütern klemmend und/oder kraft- und/oder formschlüssig erfasst, von der geschlossenen Formationen jeweils räumlich abgetrennt und in eine jeweilige definierte relative Zielposition und/oder Zielausrichtung gegenüber nachfolgenden Stückgütern gebracht, da die zu bildenden Anordnungen bzw. Zusammenstellungen von Stückgütern in aller Regel keine völlige Regelmäßigkeit bei der Positionierung und Neuausrichtung erlauben. Diese Verfahrensphase kann einen wichtigen Schritt im Zusammenhang mit der asymmetrischen Erfassung von Stückgütern bzw. mit dem asynchronen Abgreifen von Stückgütern bilden. Hierbei kann vorgesehen sein, dass zunächst eine erste Anzahl von Stückgütern erfasst und zu den Zielpositionen überführt werden, beispielsweise nur ein Stückgut, zwei, drei oder mehr Stückgüter, worauffolgend eine weitere Anzahl, die sich von der ersten Anzahl unterscheiden kann, erfasst, überführt und in den Zielpositionen abgelegt bzw. dort positioniert wird.

Gemäß einer Ausführungsform der Erfindung wird zum Bilden der palettierfähigen Lage oder der Vorgruppierung für eine palettierfähige Lage bei wenigstens zwei oder mehr zeitlich aufeinanderfolgenden Schritten jeweils immer ein einzelnes Stückgut klemmend und/oder kraft- und/oder formschlüssig erfasst, von der geschlossenen Formation jeweils räumlich abgetrennt und in eine jeweilige definierte relative Zielposition und/oder Zielausrichtung gegenüber den nachfolgenden Stückgütern der Formation gebracht. Dieses alternativ, als Abwandlung und/oder als Zusatzoption zu einigen der zuvor beschriebenen Ausführungsvarianten zu verstehende, Ausführungsbeispiel bezieht sich insbesondere auf die Option, durch Abgreifen immer nur eines einzelnen Stückguts palettierfähige Lagen zu bilden.

Vorzugsweise werden bei dem beschriebenen Verfahren durch den mindestens einen Manipulator der Vorrichtung in den wenigstens zwei zeitlich aufeinanderfolgenden Schritten jeweils ein zuvorderst in der geschlossenen Formation transportiertes Stückgut oder mehrere zuvorderst in der geschlossenen Formation transportierte Stückgüter erfasst, von der Formation abgetrennt und neu positioniert. Wie oben anhand der unsymmetrischen Beladung bzw. anhand des asynchronen Abgreifens beschrieben, bedeutet diese Erfassung nur eines einzelnen Stückgutes eine nicht vollständige Nutzung der Aufnahmekapazität des Greiferkopfes des Manipulators, bei dem in aller Regel die in Transportrichtung zuvorderst befindlichen Bereiche ungenutzt bleiben, so dass sich unter der zusätzlichen Bedingung der Minimierung der vom Greiferkopf zurückzulegenden Wege bevorzugte Rotationsrichtungen bei der Neupositionierung der Stückgüter auf ihrem Weg zur jeweiligen Zielposition und/oder Zielausrichtung innerhalb des Erfassungsbereiches ergeben.

Bei dem Verfahren können die wenigstens zwei zeitlich aufeinanderfolgenden Schritte über einen bestimmten und vorzugsweise als Deltakinematik- Roboter ausgebildeten Manipulator umgesetzt werden. Wahlweise können die jeweilige Anzahl an Stückgütern in den wenigstens zwei zeitlich aufeinanderfolgenden Schritten jeweils durch mindestens zwei sich gegenüberliegende Klemm- und/oder Greifmittel des bestimmten Manipulators klemmend und/oder formschlüssig und/oder kraftschlüssig erfasst und nach Verbringen in ihre jeweilige definierte Zielposition mittels der mindestens zwei sich gegenüberliegenden Klemm- und/oder Greifmittel freigegeben werden, insbesondere durch Öffnen der mindestens zwei sich gegenüberliegenden, beweglichen und insbesondere öffenbare und schließbare Klemm- und/oder Greifmittel. Diese Klemm- und/oder Greifmittel sind bspw. als gegeneinander zustellbare Greifbacken o. dgl. gebildet, die ein schnelles Erfassen, Verschieben, Positionieren und Freigeben der Stückgüter in der gewünschten Geschwindigkeit mit der gewünschten Stellpräzision erlauben. Wahlweise können auch andere Manipulatoren verwendet werden, bspw. solche, die als Portalroboter oder als Teile von solchen Portalrobotern ausgebildet sind. Auch andere Manipulatoren können vorteilhaft eingesetzt werden, bspw. solche, die als Mehrachsroboter oder als Teile von solchen Mehrachsrobotern ausgebildet sind.

Vorzugsweise ist vorgesehen, dass jeweils nicht erfasste Stückgüter von verbleibenden in einer Reihe bewegten Stückgütern während der klemmenden und/oder form- und/oder kraftschlüssigen Erfassung, der räumlichen Abtrennung und/oder und der Überführung des wenigstens einen Stückgutes in eine definierte relative Zielposition und/oder Zielausrichtung unterbrechungsfrei und/oder mit unveränderter Transportgeschwindigkeit weitertransportiert werden.

Außerdem kann das Verfahren wahlweise oder zusätzlich vorsehen, dass das wenigstens eine Stückgut bei Erreichen oder unmittelbar nach Erreichen seiner Zielposition und/oder Zielausrichtung ohne Unterbrechung und/oder Geschwindigkeits- und/oder Richtungsänderung weitertransportiert werden kann.

Gemäß einer alternativen Ausführungsform der Erfindung können die erfassten Stückgüter, nachdem sie ihre Zielposition und/oder Zielausrichtung erreicht und/oder eingenommen haben, vorzugsweise ohne Unterbrechung, jedoch ggf. mit veränderter Geschwindigkeit und/oder veränderter Transportrichtung weiter transportiert werden und beispielsweise einer Verpackungsvorrichtung, einer Palettierstation oder anderen weiterverarbeitenden Vorrichtungen zugeführt.

Bei dem jeweiligen Manipulationsschritt zum Erreichen der Zielposition und/oder Zielausrichtung wird dem wenigstens einem erfassten Stückgut gegenüber einer Transportgeschwindigkeit der geschlossenen Formation wenigstens eine weitere Geschwindigkeits- und/oder Richtungskomponente aufgeprägt. Dies erfolgt insbesondere im Erfassungsbereich des Manipulators der Vorrichtung. Die Änderung der Geschwindigkeit und/oder der Richtung des mindestens einen erfassten Stückgutes wird diesem insbesondere durch den Manipulator aufgeprägt. Dieser kann zusätzlich zum Drehen des mindestens einen erfassten Stückgutes ausgebildet sein. Beispielsweise befindet sich der oben beschriebene Greiferkopf an einem Drehgelenk und kann durch Rotation um einen definierten Winkel von beispielsweise 90° die Ausrichtung der zwischen den Klemmbacken erfassten Stückgüter verändern.

Es wird weiterhin eine Vorrichtung zum Umgang mit in mindestens einer Reihe in Formation hintereinander bewegten Stückgütern beschrieben, die mindestens einen Manipulator mit Klemm- und/oder Greifmitteln zur Handhabung von Stückgütern und wenigstens eine Transporteinrichtung umfasst, über welche unmittelbar aufeinanderfolgende Stückgüter der Reihe ohne oder annähernd ohne Beabstandung als geschlossene Formation in einen Erfassungsbereich des mindestens einen Manipulators transportiert werden. Der mindestens eine Manipulator ist typischer- /vorzugsweise zum klemmenden und/oder formschlüssigen und/oder kraftschlüssigen Erfassen und/oder Entgegennehmen mindestens eines Stückgutes der Formation innerhalb seines Erfassungsbereiches sowie zum Abtrennen und Überführen des mindestens einen Stückgutes der geschlossenen Formation in eine Zielposition und/oder Zielausrichtung innerhalb seines Erfassungsbereiches ausgebildet. Der Manipulator kann beispielsweise als Parallelkinematik- Roboter ausgebildet oder Teil eines solchen sein, insbesondere als Tripod oder Portalroboter, Mehrachsroboter etc. Der Manipulator weist beispielsweise mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Die Vorrichtung kann alternativ oder zusätzlich zu den beschriebenen Merkmalen ein oder mehrere Merkmale und / oder Eigenschaften des zuvor beschriebenen Verfahrens umfassen. Ebenfalls kann das Verfahren alternativ oder zusätzlich einzelne oder mehrere Merkmale und / oder Eigenschaften der beschriebenen Vorrichtung aufweisen.

Bei dieser Vorrichtung kann der mindestens eine Manipulator vorzugsweise eine bestimmte Aufnahmekapazität für mehrere Stückgüter besitzen und für die mehreren Schritte jeweils abgestimmt auf die zu bildende palettierfähige Lage oder Vorgruppierung einer palettierfähigen Lage zur Erfassung einer jeweiligen bestimmten Anzahl an Stückgütern ansteuerbar sein. Die jeweilige Anzahl an Stückgütern kann für unterschiedliche Positionierungsschritte entweder der Aufnahmekapazität des Manipulators entsprechen oder geringer sein als die Aufnahmekapazität. Auch wenn in der vorliegenden Beschreibung häufig von einer maximalen Aufnahmekapazität von bis zu drei Stückgütern je Manipulator bzw. Greiferkopf gesprochen wird, so sind die genannten Überlegungen auch auf Manipulatoren mit geringerer oder größerer maximaler Aufnahmekapazität analog anwendbar.

Für die leichtere Handhabbarkeit der Stückgüter kann es von Vorteil sein, wenn der mindestens eine Manipulator zwei sich gegenüberliegende Klemmund/oder Greifmittel zum jeweiligen Erfassen der bestimmten Anzahl an Stückgütern und Freigeben der jeweiligen bestimmten Anzahl an Stückgütern in der Zielposition und/oder Zielausrichtung besitzt.

Gemäß einer Ausführungsform ist vorgesehen, dass sich der mindestens eine Manipulator oder ein zur Erfassung von Stückgütern ausgebildeter Teil des mindestens einen Manipulators gegenüber der geschlossenen Formation beim Erfassen des wenigstens einen Stückgutes annähernd mit derselben oder mit derselben Geschwindigkeit bewegt.

Die Vorrichtung umfasst wenigstens eine vorzugsweise unterbrechungsfrei angetriebene Horizontalfördereinrichtung, auf welcher das mindestens eine Stückgut vom Manipulator oder von einem zur Erfassung von Stückgütern ausgebildeten Teils des mindestens einen Manipulators in die Zielposition- und/oder -ausrichtung gelangt. Im Zusammenhang der vorliegenden Beschreibung ist die Horizontalfördereinrichtung oftmals im Zusammenhang mit den jeweiligen Zielpositionen für die Stückgüter definiert. Aus diesem Grund ist auch oftmals, im Interesse einer Vermeidung von Unklarheiten, in der Beschreibung die Zielposition exakt definiert und ihr Zusammenhang mit der Horizontalfördereinrichtung beschrieben. Auf diese Weise wird an einigen Stellen klargestellt, dass die Zielpositionen und/oder -ausrichtungen normalerweise mittels der Stellbewegungen des Manipulators erreicht werden. Dies kann entweder auf direktem Wege erfolgen. Die endgültigen Zielpositionen können jedoch auch indirekt erreicht werden, indem bspw. vom Manipulator erfasste Stückgüter als Schieber für bereits vorpositionierte Stückgüter eingesetzt werden. Auch hierbei wirkt der Manipulator als Positionierungswerkzeug, jedoch unter Zwischenschaltung von erfassten und anschließend ebenfalls zu positionierenden Stückgütern.

Gemäß einer Ausführungsform bewegt sich der mindestens eine Manipulator oder ein zur Überführung des mindestens einen Stückgutes in die Zielposition und/oder Zielausrichtung vorgesehener Teil des mindestens einen Manipulators mit annähernd gleicher bzw. mit gleicher Geschwindigkeit gegenüber der wenigstens einen vorzugsweise unterbrechungsfrei angetriebenen Horizontalfördereinrichtung bei vollständiger Überführung des mindestens einen Stückgutes in die Zielposition und/oder Zielausrichtung. Dies gilt vorzugsweise zumindest während der Erfassung des Stückgutes bzw. der Stückgüter und unmittelbar vor und nach diesem Zeitpunkt, was auch als "Aufsynchronisieren" des Manipulators auf die sich bewegenden Stückgüter der Formation bezeichnet werden kann.

Gemäß einer Ausführungsform schließt sich die unterbrechungsfrei angetriebene Horizontalfördereinrichtung in Transportrichtung unmittelbar an die wenigstens eine Transporteinrichtung an, und die Geschwindigkeiten der wenigstens einen vorzugsweise unterbrechungsfrei angetriebenen Horizontalfördereinrichtung und die Transportgeschwindigkeit der wenigstens einen Transporteinrichtung stimmen näherungsweise oder exakt überein. Die mindestens eine Transporteinrichtung kann beispielsweise durch mindestens ein Zuförderband oder eine Mehrzahl von parallelen Zuförderbändern gebildet sein, die vorzugsweise unmittelbar an die Horizontalfördereinrichtung münden und insbesondere einen ersten Transportbereich bilden. Bei Zuförderung der Stückgüter in einer zumindest weitgehend lückenlosen Formation erfolgt in dem ersten Transportbereich- und im Gegensatz zum bekannten Stand der Technik - normalerweise keine Vorgruppierung bzw. Taktbildung der Stückgüter, sondern diese erfolgt gleichzeitig mit der Positionierung durch Erfassen, Verschieben und/oder Drehen, Erreichen der Zielpositionen und/oder Zielausrichtungen und anschließendes Lösen des Manipulators von den jeweils positionierten und/oder ausgerichteten Stückgütern innerhalb des sogenannten Gruppiermoduls, das insbesondere durch die Horizontalfördereinrichtung und den oberhalb der Horizontalfördereinrichtung angeordnete mindestens eine Manipulator gebildet wird. Aus der gesamten Beschreibung wird somit deutlich, dass bei einer lückenlosen Zuförderung eine Vorgruppierung im herkömmlichen Sinne, die sich von dem Vorgang der Lagenbildung deutlich erkennen und/oder abgrenzen ließe, gar nicht stattfindet, sondern im Bewegungsverlauf zwischen der Abtrennung der jeweiligen Stückgüter von der Formation und der Erreichung der Zielpositionen aufgelöst ist.

Für gleiche oder gleich wirkende Elemente der Erfindung werden jeweils identische Bezugzeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

Figuren 1 und 3 bis 8 zeigen schematisch einen zeitlichen Ablauf einer ersten Ausführungsvariante eines erfindungsgemäßen Verfahrens zum Umgang mit in mindestens einer Reihe hintereinander bewegten Stückgütern durch eine entsprechende Handhabungsvorrichtung.

Figuren 2A bis 2C und die Figuren 2D bis 2F zeigen jeweils das Erfassen einer unterschiedlichen Anzahl von Stückgütern durch einen Manipulator der Handhabungsvorrichtung.

Figuren 9 bis 16 zeigen schematisch einen zeitlichen Ablauf einer zweiten Ausführungsvariante eines erfindungsgemäßen Verfahrens zum Umgang mit in voneinander beabstandeten Reihen von jeweils hintereinander bewegten Stückgütern durch eine entsprechende Handhabungsvorrichtung, was einem getakteten Zulauf der Stückgüter bzw. der Reihen von Stückgütern entspricht.

Für gleiche oder gleich wirkende Elemente der Erfindung werden identische Bezugzeichen verwendet. Ferner werden der Übersicht halber nur Bezugzeichen

in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

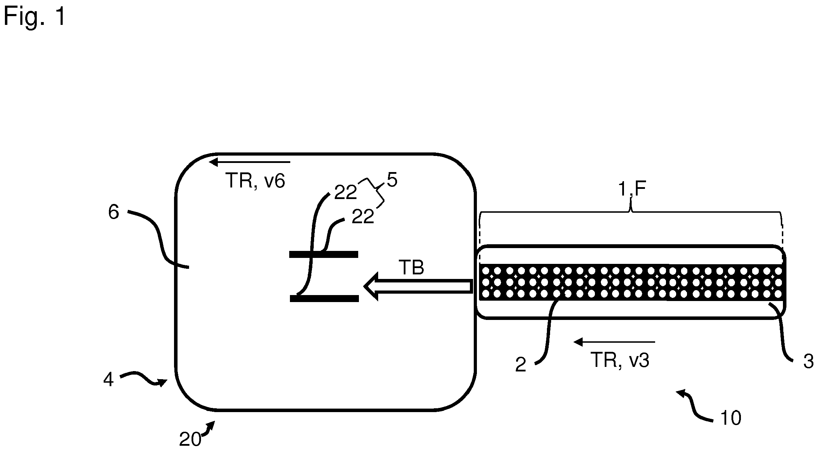

Figur 1 zeigt insbesondere das Einlaufen der Stückgüter 2 als Reihe 1 bzw. in im Wesentlichen lückenloser Formation F über die Transporteinrichtung 3 der Handhabungsvorrichtung 10. Bei den Stückgütern 2 handelt es sich im dargestellten Ausführungsbeispiel jeweils um Gebinde aus sechs Getränkebehältern, die beispielsweise mit einer Schrumpfverpackung zusammen gehalten werden.

Die Stückgüter 2 werden in Transportrichtung TR mit einer vorzugsweise konstanten Transportgeschwindigkeit v3 in Richtung eines Erfassungsbereiches 4 eines beweg-, verschieb- und/oder rotierbaren Manipulators 5 der Handhabungsvorrichtung 10 bewegt und insbesondere lückenlos von der Transporteinrichtung 3 an eine Horizontalfördereinrichtung 6 übergeben und auf dieser mit einer konstanten Geschwindigkeit v6 weitergeführt, die insbesondere der Transportgeschwindigkeit v3 der Transporteinrichtung 3 entspricht.

Die Transporteinrichtung 3 ist beispielsweise ein Förderband oder eine andere geeignete Fördereinrichtung, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in einer sogenannten geschlossenen Formation F in den Erfassungsbereich 4 des beweg-, verschieb- und/oder rotierbaren Manipulators 5 ein.

Weiterhin ist möglich, dass die Stückgüter 2 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der Transporteinrichtung 3 transportiert werden.

Weiterhin ist in Figur 1 die Bewegungsbahn TB der in Formation F ankommenden Stückgüter 2 auf der Horizontalfördereinrichtung 6 dargestellt, die sich in einer Flucht zur Bewegungsrichtung der Stückgüter 2 auf der Transporteinrichtung 3 befindet.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet. Die Stückgüter 2 werden insbesondere lückenlos von der mindestens einen Transporteinrichtung 3 in das Gruppiermodul 20 überführt und durch die Horizontalfördereinrichtung 6 konstant weiter bewegt.

Der Manipulator 5, welcher oberhalb der Horizontalfördereinrichtung 6 im Gruppiermodul 20 angeordnet ist, ist zum klemmenden und/oder kraft- und/oder formschlüssigen Entgegennehmen von Stückgütern 2 innerhalb des Erfassungsbereichs 4 ausgebildet. Die vom Manipulator 5 erfassten zwei Stückgüter 2 werden nachfolgend zur Unterscheidung von den in Formation F angeordneten Stückgütern 2 mit dem Bezugszeichen 2* bezeichnet. Beispielsweise greift der Manipulator 5 in mehreren zeitlich aufeinanderfolgenden Schritten mindestens ein, vorzugsweise mindestens zwei oder drei nacheinander angeordnete der in geschlossener Formation F und mit konstanter Transportgeschwindigkeit v3 einlaufenden Stückgüter 2, 2*, trennt diese von der einreihigen Formation F der Stückgüter 2 ab und überführt das abgetrennte Stückgut 2* bzw. die abgetrennte Gruppe von zwei oder drei lückenlos in Reihe angeordneten Stückgütern 2* in eine Zielposition P und/oder Zielausrichtung. Dabei kann vorgesehen sein, dass das Stückgut 2* bzw. die Gruppe von Stückgütern 2* seitlich gegenüber der einlaufenden Formation F an Stückgütern 2 verschoben wird und/oder dass das erfasste Stückgut 2* bzw. die erfasste Gruppe von Stückgütern 2* durch den Manipulator 5 in Transportrichtung TR von der Formation F der Stückgüter 2 beabstandet wird. Zusätzlich kann bei dem erfindungsgemäßen Verfahren vorgesehen sein, dass das Stückgut 2* bzw. die Gruppe von Stückgütern 2* gegenüber den Stückgütern 2 der Formation F verdreht wird.

Während der Positionierung der vom Manipulator 5 erfassten Stückgüter 2* werden die mindestens eine Transporteinrichtung 3 und die Horizontalfördereinrichtung 6 weiterhin konstant betrieben. Insbesondere werden die Stückgüter 2 der Formation F, sowie die bereits in der Zielposition P angeordneten Stückgüter 2* unterbrechungsfrei und/oder mit unveränderter Transportgeschwindigkeit v3 auf der Transporteinrichtung 3 bzw. mit unveränderter Geschwindigkeit v6 auf der Horizontalfördereinrichtung 6 weiter transportiert.

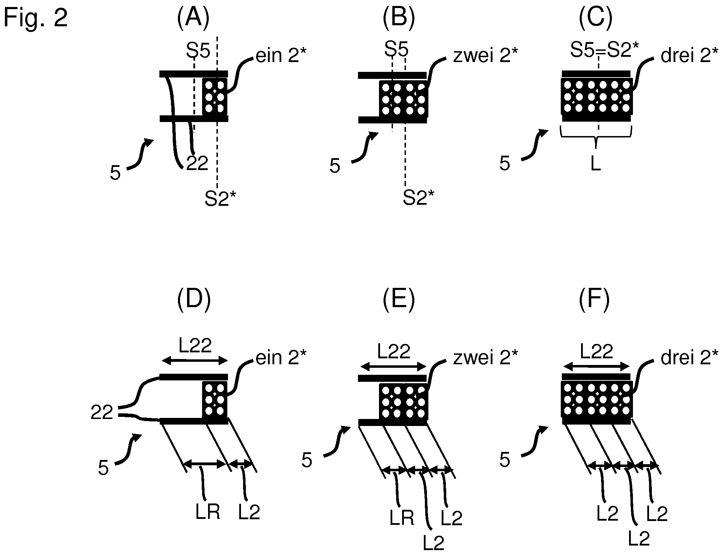

Der Manipulator 5 besitzt vorzugsweise eine bestimmte Aufnahmekapazität für mehrere Stückgüter 2, 2* (vergleiche Figuren 2 und zugehörige Beschreibung). Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Formation F erfasst. Dies wird insbesondere über eine Steuereinrichtung (nicht dargestellt) kontrolliert und/oder geregelt. Die Anzahl der erfassten Stückgüter variiert hierbei zwischen eins und der maximalen Anzahl gemäß der Aufnahmekapazität des Manipulators 5. Auch wenn in den dargestellten Ausführungsbeispielen eine maximale Aufnahmekapazität von bis zu drei Stückgütern 2, 2* je Manipulator 5 beschrieben wird, so sind die genannten Überlegungen auch auf Manipulatoren 5 mit geringerer oder größerer maximaler Aufnahmekapazität analog anwendbar.

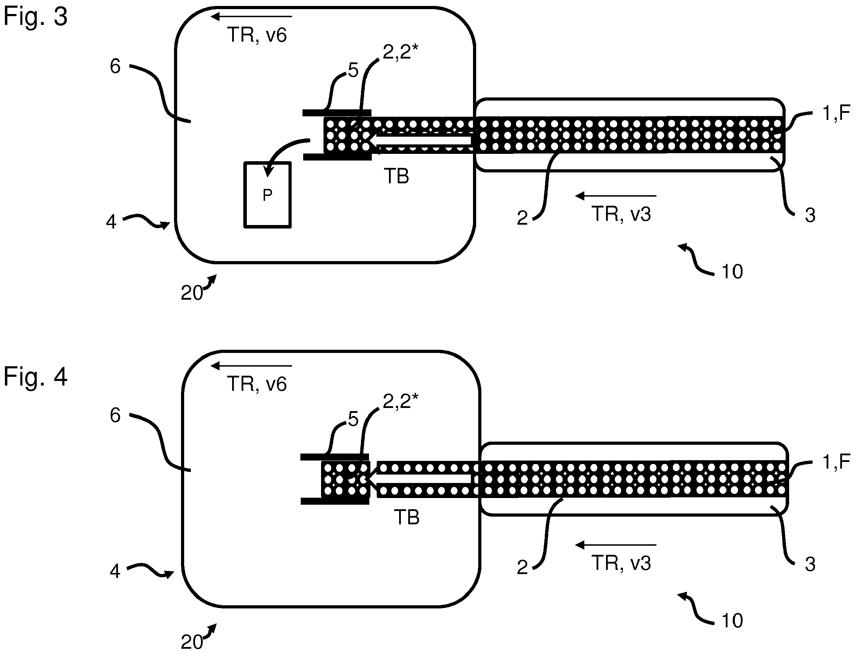

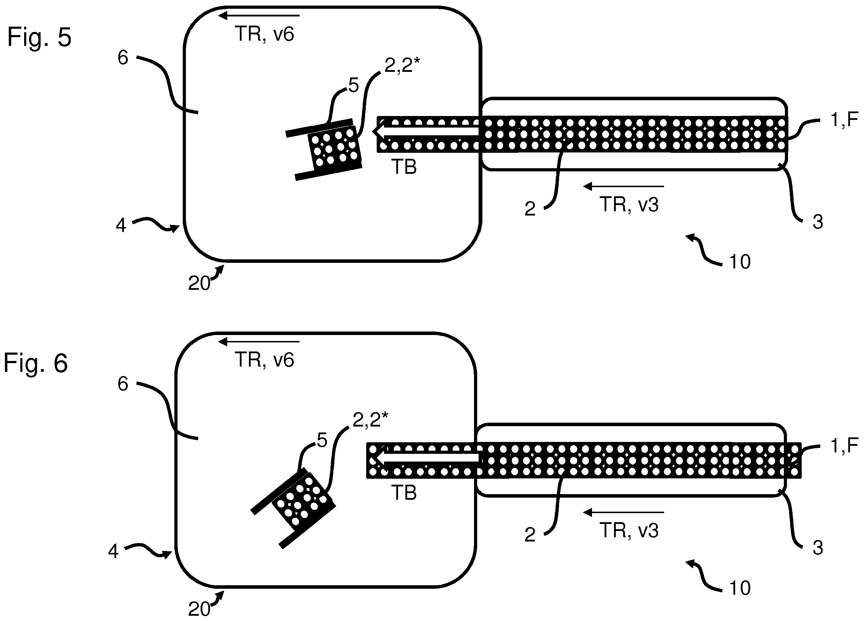

Die Figuren 3 bis 8 zeigen einen ersten Verfahrensschritt zum Umgang mit in mindestens einer Reihe 1 hintereinander bewegten Stückgütern 2, beispielsweise bei der Bildung einer palettierfähigen Lage oder einer Vorgruppierung für eine palettierfähige Lage aus Stückgütern 2, wobei in dem dargestellten Verfahrensschritt ein Abgreifen von zwei zuvorderst in der geschlossenen Formation F angeordneten Stückgütern 2 aus der Formation F durch einen Manipulator 5 erfolgt, der eine maximale Aufnahmekapazität von drei Stückgütern aufweist. Die nicht durch den Manipulator 5 erfassten Stückgüter 2 der Reihe 1 werden im Erfassungsbereich 4 des Manipulators 5 ohne Unterbrechung und mit unveränderter Geschwindigkeit v6 weitertransportiert.

In dem in den Figuren 3 bis 8 dargestellten ersten Verfahrensschritt wird eine Gruppe von zwei durch den Manipulator 5 asymmetrisch gegriffenen Stückgütern 2, 2* auf eine Zielposition P links von einer Flucht der Transporteinrichtung 3 befördert und dabei gedreht.

Hierbei kann vorgesehen sein, dass der Manipulator 5 die zwei asymmetrisch erfassten Stückgüter 2* beispielsweise anhebt, zur Zielposition P befördert und auf der Horizontalfördereinrichtung 6 innerhalb des Erfassungsbereiches 4 wieder absetzt. Alternativ kann vorgesehen sein, dass der Manipulator 5 die zwei Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt.

Vorzugsweise werden die zwei asymmetrisch erfassten Stückgüter 2* hierbei in einem einzigen, insbesondere unterbrechungsfreien, Manipulationsschritt in die Zielposition P und/oder -ausrichtung überführt, geschoben und dabei entsprechend gedreht. Insbesondere werden die zwei asymmetrisch erfassten Stückgüter 2* in eine Position P gebracht, so dass die in mehreren zeitlich aufeinander folgenden Verfahrensschritten manipulierten und in jeweilige Zielpositionen P gebrachten Stückgüter 2* eine palettierfähige Lage oder eine Vorgruppierung für eine palettierfähige Lage bilden.

Bei den hier beschriebenen Manipulationsschritten ist insbesondere vorgesehen, dass sich der Manipulator 5 zumindest beim asymmetrischen Erfassen der zwei Stückgüter 2* und bei deren Freigabe in der Zielposition P1 und Zielausrichtung mit einer Geschwindigkeit bewegt, die annähernd bzw. exakt der Transportgeschwindigkeit v3 entspricht, mit der sich die geschlossene Formation F der Stückgüter 2 bewegt bzw. die der Geschwindigkeit v6 entspricht, mit der sich die Horizontalfördereinrichtung bewegt.

Nachdem die Stückgüter 2* ihre Zielposition P erreicht haben und sich der Manipulator 5 jeweils von diesen gelöst hat, werden die Stückgüter 2* in Transportrichtung TR und in Geschwindigkeit v6 auf der Horizontalfördereinrichtung 6 weiterbewegt. Die jeweilige Zielposition P ist insbesondere eine Relativposition zu den nachfolgenden, nicht vom Manipulator 5 in ihrer Position veränderten Stückgütern 2. Da bei der hier beschriebenen Ausführungsform die Geschwindigkeit v6 der Horizontalfördereinrichtung 6 der Transportgeschwindigkeit v3 der Transporteinrichtung 3 entspricht und da die Transportrichtung TR der Transporteinrichtung 3 und der Horizontalfördereinrichtung 6 ebenfalls korrespondieren, werden die durch den Manipulator 5 in ihrer Position und/oder Ausrichtung veränderten Stückgüter 2* bei und/oder unmittelbar nach Erreichen ihrer Zielposition P ohne Unterbrechung und/oder Geschwindigkeits- und/oder Richtungsänderung weitertransportiert.

Bei dem dargestellten Ausführungsbeispiel werden zwei Stückgüter 2 der Formation F durch den Manipulator 5 asymmetrisch erfasst und in eine Zielposition P überführt, wobei die erfasste Gruppen aus zwei Stückgütern zusätzlich um 90° gedreht wird. Für den Fachmann ist insbesondere im Zusammenhang mit der Offenbarung der Figur 2 klar, dass je nach Ausbildung des Manipulators 5 und Anordnung des Manipulators 5 an der einlaufenden geschlossenen Formation F auch in zeitlich verschiedenen Verfahrensschritten jeweils unterschiedliche Mengen an Stückgütern 2, 2* erfasst werden können.

Die Aufnahmeposition des Manipulators 5 wird entsprechend der Anzahl der abzugreifenden / abzuteilenden Stückgüter 2* verschoben. Die auf der zu bildenden Lage benötigten Produktgruppen werden somit während des Manipulationsschritts, der einen Gruppierprozess und einen Positionierprozess in einem einzigen Verfahrensschritt vereint, gebildet.

Die Transportgeschwindigkeit v3 der Transporteinrichtung 3 bzw. die Geschwindigkeit v6 der Horizontalfördereinrichtung 6 ist dabei so gewählt, dass der Manipulator 5 innerhalb des ihm zur Verfügung stehenden Arbeitsbereichs bzw. Erfassungsbereichs 4 ausreichend Zeit hat, um die Stückgüter 2* zu verschieben. Bevorzugt besteht der Manipulator 5 aus einem Deltakinematik- Roboter, um hoch dynamische Verschiebebewegungen der wenigstens zwei zeitlich aufeinanderfolgenden Schritte zu realisieren und möglichst schnelle Taktzeiten zu ermöglichen.

Vor dem Einleiten einer Drehung des Manipulators 5 kann dieser beispielsweise zusammen mit den erfassten Stückgütern 2* zumindest kurzfristig gegenüber den Stückgütern 2 der Formation F beschleunigt werden, um die vom Manipulator 5 erfassten Stückgüter 2* zumindest geringfügig von den nachfolgenden Stückgütern 2 der Formation F abzutrennen.

Bei dem hier beschriebenen Verfahren werden die Gruppen an Stückgütern 2* gemäß der jeweils zu bildenden Anordnung während des Gruppier- / Positionierprozesses zusammengestellt bzw. gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

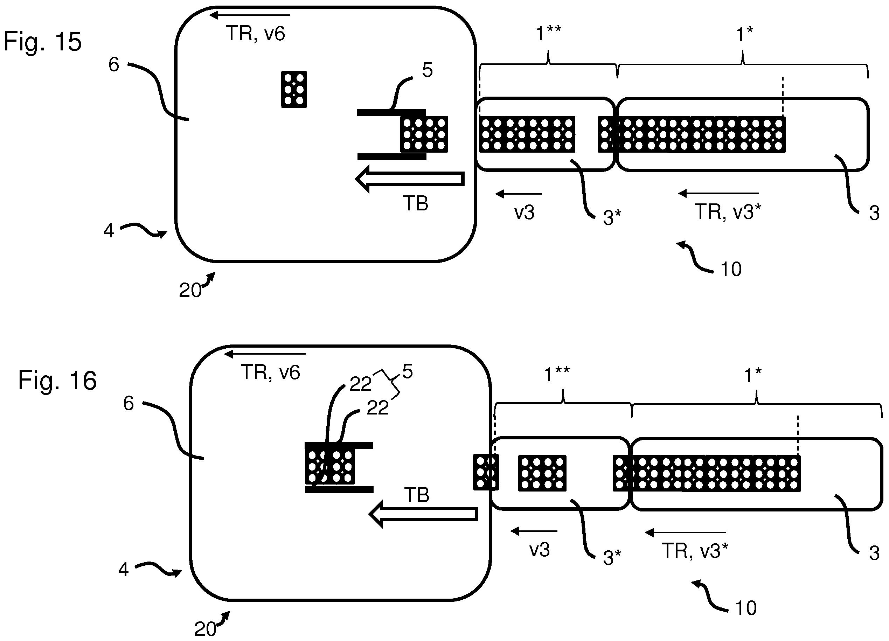

Wenn im vorliegenden Fall bzw. generell im Zusammenhang der vorliegenden Erfindung und/oder im Zusammenhang mit den hier anhand der Figuren 1 bis 16 beschriebenen Ausführungsbeispiele generalisierend von einem Manipulator 5 die Rede ist, kann es sich konkret bei dem zur Überführung des mindestens einen Stückgutes 2, 2* in die Zielposition P und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik- Anordnung bekannte - Manipulatoraufhängung bzw. Manipulatoranordnung ermöglicht die gewünschte Beweglichkeit des Kopfes (auch: des Manipulators 5), der die Stückgüter 2, 2* in der gewünschten Weise erfassen, verschieben, positionieren, platzieren, drehen etc. kann, um die jeweiligen Zielpositionen P und/oder Zielausrichtungen für die Stückgüter 2, 2* anfahren zu können. Ebenso denkbar sind jedoch auch andere geeignete Manipulatorkonfigurationen, bspw. solche mit Portalroboter- Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Figur 2A bis 2C zeigen das Erfassen einer unterschiedlichen Anzahl von Stückgütern 2, 2* durch einen Manipulator 5 der Handhabungsvorrichtung 10. Der Manipulator 5 besitzt vorzugsweise eine bestimmte Aufnahmekapazität für mehrere Stückgüter 2, 2*. Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Formation F erfasst. Dies wird insbesondere über eine Steuereinrichtung (nicht dargestellt) kontrolliert und/oder geregelt. Die Anzahl der erfassten Stückgüter variiert hierbei zwischen eins und der maximalen Anzahl gemäß der Aufnahmekapazität des Manipulators 5.

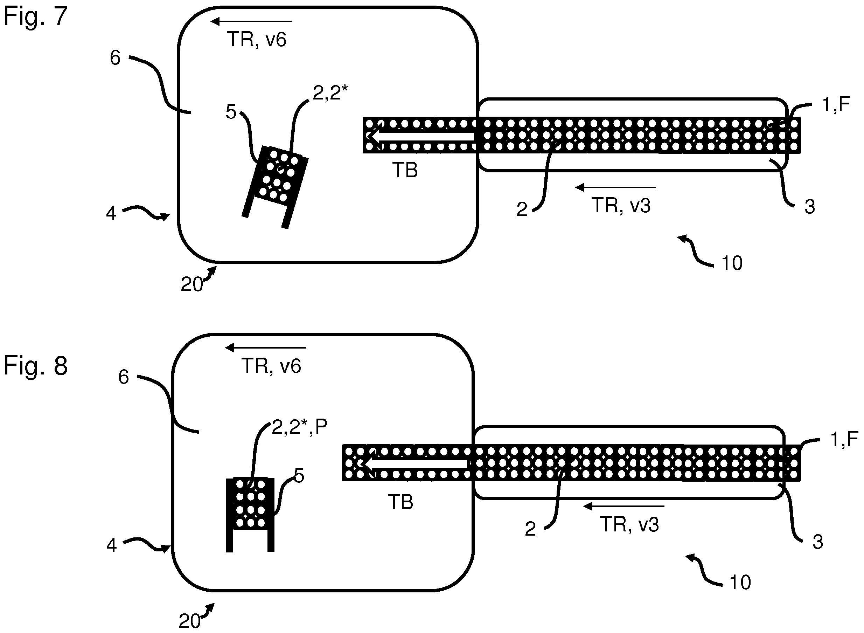

Der in den Figuren 2 schematisch dargestellte Manipulator 5 ist beispielsweise als Greiferkopf ausgebildet und weist zum klemmenden und/oder formschlüssigen Entgegennehmen von Stückgüter 2, 2* zwei starre, bewegliche und/oder gegeneinander zustellbare, sich gegenüberliegende Klemm- und/oder Greifmittel auf, insbesondere zwei Klemmbacken 22 oder Greiferpaddel oder ähnliches. Vorzugsweise ist eine zwischen den Klemmbacken 22 ausgebildete Aufnahmeöffnung ausgebildet, die durch eine Zustellbewegung der Klemmbacken 22 zueinander verkleinert werden kann und durch eine Gegenbewegung der Klemmbacken 22 voneinander weg vergrößert werden kann. Zwischen den Klemmbacken 22 kann das mindestens eine Stückgut 2, 2* geklemmt und/oder kraftschlüssig und/oder formschlüssig erfasst und dadurch entsprechend zur gewünschten Zielposition P (vergleiche Figur 8) bewegt werden. Die Länge L der Klemmbacken 22 ist derart gewählt, dass eine maximale Anzahl an Stückgütern 2*, welche einen Takt für die Lage bilden, abgegriffen werden können. Der in den Figuren 2 dargestellte Manipulator 5 kann insbesondere ein Stückgut 2* (vergleiche Figur 2A), zwei Stückgüter 2* (vergleiche Figur 2B) oder drei Stückgüter 2* (vergleiche Figur 2C) erfassen.

Hierbei kann vorgesehen sein, das eine, durch das wenigstens eine, von den mindestens zwei Klemmbacken 22 des wenigstens einen Manipulators 5 erfasste Stückgut 2* definierte erste vertikale Symmetrieebene S2* beabstandet ist von einer zweiten vertikalen Symmetrieebene S5, die durch den Manipulator 5 bzw. durch dessen Klemmbacken 22 definiert ist. Damit kann insbesondere definiert sein, dass das mindestens eine vom Manipulator 5 erfasste Stückgut 2* dort nicht mittig bzw. symmetrisch zur vertikalen Mittel- und/oder Drehachse des Manipulators 5 bzw. dessen Klemmbacken 22 erfasst und positioniert ist, während es verschoben und/oder in Richtung der Zielposition P gebracht wird, ggf. unter gleichzeitiger Rotation. Dies gilt gleichermaßen für zwei oder mehr erfasste Stückgüter 2*, die ebenfalls außermittig bzw. unsymmetrisch im Manipulator 5 geklemmt sein können. Man spricht hierbei auch von einem asymmetrischen oder unsymmetrischen Beladen des Manipulators.

Figuren 2A und 2B zeigen das unsymmetrische Beladen eines Manipulators 5, der zwischen den Klemmbacken 22 bis zu drei Stückgüter 2* erfassen kann. Wird der Manipulator 5 nur mit einem oder zwei Stückgütern 2 beladen, so erfolgt die Anordnung der Stückgüter 2* außermittig zu den Klemmbacken 22, d.h., die erste vertikale Symmetrieebene S2* ist beabstandet von der zweiten vertikalen Symmetrieebene S5 des Manipulators 5. Wird der Manipulator 5 dagegen vollständig mit drei Stückgütern 2* beladen, dann fallen die erste vertikale Symmetrieebene S2* und die zweite vertikale Symmetrieebene S5 des Manipulators 5 zusammen, was in der Figur 2C verdeutlicht ist.

Die Figuren 2D, 2E und 2F verdeutlichen denselben Zusammenhang nochmals mit anderen Bezeichnungen und anhand der nachfolgenden Gleichungs- und Ungleichungszusammenhänge. So sei L22 die Gesamtlänge der Klemmbacken 22 des Manipulators 5. L2 sei die Länge eines Stückgutes 2 bzw. 2*, das sich aktuell zwischen den Klemmbacken 22 befindet. Dementsprechend sei LR die jeweils nicht von Stückgütern 2 bzw. 2* besetzte Restlänge oder Leerlänge zwischen den Klemmbacken 22 des Manipulators 5. Wie es die Figuren 2D, 2E und 2F gemeinsam veranschaulichen, gilt bei einer Klemmbackenlänge L22, die der dreifachen Länge einer Stückgutlänge L2 entspricht, der generelle Zusammenhang:

$$LR = (3 - x) \cdot L2,$$

wobei x die Anzahl der jeweils zwischen den Klemmbacken 22 geklemmten, d.h. aktuell im Manipulator 5 befindlichen Stückgüter 2* ist. Demzufolge gilt bei nur einem im Manipulator 5 befindlichen Stückgut:

$$x = 1,$$

was gleichzeitig der Darstellung der Figur 2A sowie der Figur 2D entspricht, folgender Sonderfall:

$$LR = (3 - x) \cdot L2 = 2 \cdot L2$$

In entsprechender Weise gilt bei zwei unsymmetrisch im Manipulator 5 befindlichen Stückgütern:

$$x = 2,$$

was gleichzeitig der Darstellung der Figur 2B sowie der Figur 2E entspricht, folgender Sonderfall:

$$LR = (3 - x) \cdot L2 = 1 \cdot L2 = L2$$

In dem in Figur 2F gezeigten Sonderfall der symmetrischen Beladung des Manipulators 5 mit insgesamt drei Stückgütern 2* (vergleiche hierzu auch Figur 2C mit den zusammenfallenden Symmetrieebenen S2* und S5) gilt folglich:

$$x = 3,$$

woraus sich für die Restlänge LR ein Wert von Null errechnet:

$$LR = (3 - x) \cdot L2 = 0 \cdot L2 = 0$$

Bei den mit Bezug auf die Figuren 2A bis 2F angestellten Überlegungen wird generell von einer unsymmetrischen Beladung des Manipulators 5 bzw. von einem asymmetrischen Greifen ausgegangen, wobei die zwischen den Klemmbacken 22 befindlichen Stückgüter 2* an einem Rand der Klemmbacken 22 angeordnet sind, so dass die nicht belegte Restlänge LR immer nur einseitig auftritt, nicht jedoch beidseitig der zwischen den Klemmbacken 22 befindlichen Stückgüter. Aus diesem Grund lässt sich weiterhin feststellen, dass eine unsymmetrische Beladung des Manipulators 5 bzw. ein asymmetrisches Greifen immer dann gegeben ist, wenn beide der folgenden Bedingungen gelten:

$$L22 > x \cdot L2,$$

und

$$LR \geq (L22 - x \cdot L2) \cdot \tfrac{1}{2}$$

wobei x generell die Werte Null, Eins, Zwei oder Drei annehmen kann, während x zur Erfüllung der obigen Ungleichungen bei unsymmetrischer Beladung bzw. bei asymmetrischem Greifen im gezeigten Ausführungsbeispiel lediglich die Werte Eins (x = 1; vgl. Figur 2D) oder Zwei (x = 2; vgl. Figur 2E) annehmen darf, da ansonsten ein leerer Manipulator 5 (bei x = 0; nicht gezeigt) oder ein voll beladener und symmetrisch beladener Manipulator 5 (bei x = 3; vgl. Figur 2F) gegeben wäre.

Es sei an dieser Stelle der Vollständigkeit halber erwähnt, dass auch ein Fall eines symmetrischen Greifens mit nicht voll besetztem Manipulator 5 denkbar wäre, so dass zwischen den Klemmbacken 22 beispielsweise zwei Stückgüter 2* mittig angeordnet sein könnten, so dass auch die jeweiligen Symmetrieebenen S2* der Stückgüter 2* und S5 des Manipulators 5 zusammenfallen könnten. Dieser Fall wäre mit den obigen Formeln nicht darstellbar, da hierbei zwar die obige Ungleichung (L22 > x . L2) gelten würde. Allerdings wäre bei einer solchen Greifsituation die gesamte Restlänge LR zu gleichen Teilen auf beide Randabschnitte zwischen den Klemmbacken 22 verteilt, so dass die untere Ungleichung [LR ≥ (L22 - x . L2) . ½] nicht erfüllt wäre.

Der Manipulator 5 bzw. Greiferkopf ist zur Änderung der Geschwindigkeit und/oder der Richtung des mindestens einen erfassten Stückgutes 2, 2* ausgebildet. Weiterhin kann der Manipulator 5 bzw. Greiferkopf zusätzlich zum Drehen des mindestens einen erfassten Stückgutes 2, 2* ausgebildet sein. Beispielsweise befindet sich der oben beschriebene Greiferkopf an einem Drehgelenk und kann durch Rotation um einen definierten Winkel von beispielsweise 90° die Ausrichtung der zwischen den Klemmbacken 22 erfassten Stückgüter 2, 2* verändern.

Nachdem das vom Manipulator 5 erfasste mindestens eine Stückgut 2, 2* seine Zielposition P (vergleiche Figur 8) erreicht hat, wird es durch Öffnen der mindestens zwei sich gegenüberliegenden Klemm- und/oder Greifmittel, insbesondere durch Öffnen der Klemmbacken 22, freigegeben.

In den hier dargestellten und beschriebenen Ausführungsbeispielen kann es sich bei dem zur Überführung des mindestens einen Stückgutes 2, 2* in die Zielposition P und/oder Zielausrichtung vorgesehenen Teil des Manipulators 5 um einen Greiferkopf handeln, der bspw. an beweglich gelagerten Auslegerarmen gehaltert und gelagert ist, welche Auslegerarme wiederum typischerweise an einem Gestell oder Rahmen o. dgl. gestellfest gelagert sind. Eine solche - auch als Parallelkinematik- Anordnung bekannte - Manipulatoraufhängung bzw. -anordnung ermöglicht die gewünschte Beweglichkeit des Greiferkopfes, der die Stückgüter 2, 2* in der gewünschten Weise erfassen, verschieben, positionieren, platzieren, drehen etc. kann, um die Zielpositionen P und/oder Zielausrichtungen für die Stückgüter 2, 2* anfahren zu können.

Hinsichtlich der beschriebenen Drehbewegungen kann erwähnt werden, dass der Manipulator 5 bzw. dessen Greiferkopf wahlweise um einen gewünschten Ausrichtungswinkel für die Stückgüter 2 bzw. 2* rotieren kann, wahlweise um bspw. 45°, um bspw. ca. 90° oder auch um andere Drehwinkel. Besonders vorteilhaft kann eine Endlos- Drehbarkeit des Greiferkopfes des Manipulators 5 sein, da auf diese Weise bei Drehungen um bspw. 180° oder um 90° eine schnelle Weiterdrehung während der Rückbewegung zur Formation F zurück erfolgen kann, die ggf. eine kürzere Zeitdauer erfordert als eine Rückdrehung im entgegengesetzten Drehsinn. Auf diese Weise können durch eine solche Endlos-Drehbarkeit des Greiferkopfes mit prinzipiell unbegrenztem Drehwinkel immer die jeweils schneller durchführbaren Drehrichtungen gewählt werden; dies betrifft sowohl die Positionierung der erfassten Stückgüter 2 bzw. 2* als auch "Leerfahrten" bei den Rückstellbewegungen des Manipulators 5 in Richtung zur Formation F, um dort weitere Stückgüter 2 bzw. zumindest ein weiteres Stückgut 2 aufzunehmen.

Die Möglichkeit, mit demselben Manipulator 5 bzw. Greiferkopf im verschiedenen Verfahrensschritten jeweils unterschiedliche Mengen an Stückgütern 2, 2* zu erfassen, insbesondere durch eine asymmetrische Aufnahme von Stückgütern 2, 2* ermöglicht das Abteilen unterschiedlicher Gruppen von Stückgütern 2, 2* unter Verwendung eines einzigen Manipulators 5 bzw. Greiferkopfes. Dies führt zu einer erhöhten Variabilität der Vorrichtung 10, zudem können Kosten und Lagerplatz eingespart werden, da nunmehr nicht für jedes Produkt entsprechende Manipulatoren 5 bzw. Greiferköpfe vorgehalten werden müssen. Da jeweils Gruppen von Stückgütern in gerade benötigter Anzahl abgegriffen werden, können gegebenenfalls auch Verfahrensschritte eingespart werden, wodurch ein höherer Durchsatz erzielt werden kann.

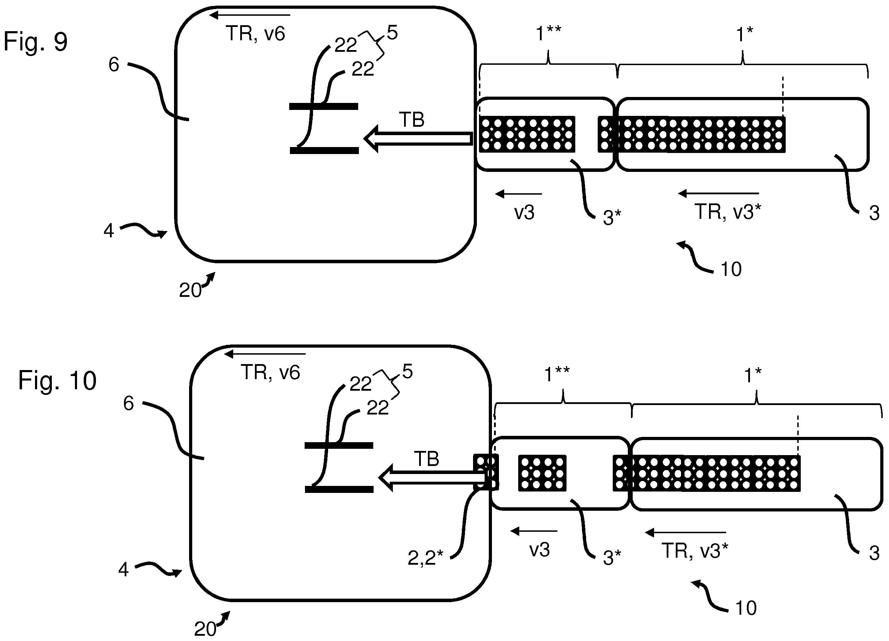

Die weiteren Figuren 9 bis 16 verdeutlichen anhand eines weiteren Ausführungsbeispiels einen getakteten Zulauf der Stückgüter 2, die mittels einer Transporteinrichtung 3 und eines sich daran anschließenden kurzen Transportabschnittes 3* zur Horizontalfördereinrichtung 6 bzw. dem Erfassungsbereich 4 des Manipulators 5 befördert werden. So zeigt die Figur 9 insbesondere das Einlaufen der Stückgüter 2 als endliche Reihe 1* mit definierter Länge bzw. definierter Anzahl von Stückgütern 2 über die Transporteinrichtung 3 der Handhabungsvorrichtung 10. Bei den Stückgütern 2 kann es sich im dargestellten Ausführungsbeispiel jeweils um Gebinde aus sechs Getränkebehältern handeln, die beispielsweise mit einer Schrumpfverpackung zusammen gehalten werden.

Wie es die Figuren 9 bis 16 andeuten, muss die Reihe 1*, die kürzer ausfällt als die zuvor anhand der Figuren 1 bis 8 gezeigte Reihe 1 der geschlossenen Formation F, nicht über die gesamte Länge der Transporteinrichtung 3 reichen, sondern kann beispielsweise nur eine Anzahl von insgesamt acht Stückgütern 2 abdecken, bildet also keine geschlossene Formation F mehr, wie diese zuvor anhand des ersten Ausführungsbeispiels gemäß Figuren 1 bis 8 definiert wurde.

Die Stückgüter 2 werden auf der Transporteinrichtung 3 zunächst in Transportrichtung TR mit einer vorzugsweise konstanten Transportgeschwindigkeit v3* in Richtung zu einem sich unmittelbar an die Transporteinrichtung anschließenden kürzeren Transportabschnitt 3* befördert, wo sie auf die schnellere Transportgeschwindigkeit v3 beschleunigt werden, wodurch Lücken zwischen Gruppen aufeinander folgender Stückgüter 2 der Reihe 1* gezogen werden, so dass hierdurch kürzere Reihen 1** aus beispielsweise nur vier Stückgütern 2 gebildet werden, wie dies die Figur 9 andeutet. Der Transportabschnitt 3* mündet an der Horizontalfördereinrichtung 6, so dass die Stückgüter 2 vom Transportabschnitt 3* in den Erfassungsbereich 4 des beweg-, verschieb- und/oder rotierbaren Manipulators 5 der Handhabungsvorrichtung 10 bewegt und insbesondere mit Lücken definierter Längen zwischen aufeinander folgenden kürzeren Reihen 1** von Stückgütern 2 vom Transportabschnitt 3* an die Horizontalfördereinrichtung 6 übergeben und auf dieser mit einer konstanten Geschwindigkeit v6 weitergeführt werden, wobei deren konstante Geschwindigkeit v6 annähernd der Transportgeschwindigkeit v3 des Transportabschnittes 3* entspricht, die wiederum schneller ist als die Transportgeschwindigkeit v3* der Transporteinrichtung 3.

Sowohl die Transporteinrichtung 3 als auch der Transportabschnitt 3* sind beispielsweise jeweils durch Förderbänder oder andere geeignete Fördereinrichtungen gebildet, auf denen die Stückgüter 2 vorzugsweise einreihig transportiert werden, wobei zwischen jeweils direkt aufeinander folgenden Stückgütern 2 innerhalb ihrer jeweiligen Reihen 1* bzw. 1** keine bzw. nur eine geringfügige, gegebenenfalls prozessbedingte, Lücken bestehen. Die Stückgüter 2 laufen somit in Gruppen bzw. Reihen 1* bzw. 1** mit jeweils definierter Anzahl von Stückgütern 2 in den Erfassungsbereich 4 des beweg-, verschieb- und/oder rotierbaren Manipulators 5 ein.

Wahlweise ist es auch möglich, dass die Stückgüter 2 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der Transporteinrichtung 3 transportiert werden. Eine solche Variante ist jedoch in den Figuren 9 bis 16 nicht gezeigt.

Weiterhin ist in Figur 9 sowie in den sich daran anschließenden Figuren 10 bis 16 die Bewegungsbahn TB der in der kurzen Reihe 1** ankommenden Stückgüter 2 auf der Horizontalfördereinrichtung 6 dargestellt, die sich in einer Flucht zur Bewegungsrichtung der Stückgüter 2 auf der Transporteinrichtung 3 und auf dem Transportabschnitt 3* befindet.

Die Horizontalfördereinrichtung 6 und der oberhalb der Horizontalfördereinrichtung 6 angeordnete mindestens eine Manipulator 5 können in ihrer Zusammenwirkung auch als Gruppiermodul 20 der Handhabungsvorrichtung 10 bezeichnet werden. Die Stückgüter 2 werden insbesondere mit Lücken definierter Länge zwischen aufeinander folgenden Riehen 1** und damit in definierter Taktung von dem sich an die Transporteinrichtung 3 anschließenden Transportabschnitt 3* in das Gruppiermodul 20 überführt und durch die Horizontalfördereinrichtung 6 konstant mit der Fördergeschwindigkeit v6 in die Transportrichtung TR weiter bewegt.

Der Manipulator 5, welcher oberhalb der Horizontalfördereinrichtung 6 im Gruppiermodul 20 angeordnet ist, ist zum klemmenden und/oder kraft- und/oder formschlüssigen Entgegennehmen von Stückgütern 2 innerhalb des Erfassungsbereichs 4 ausgebildet. Die vom Manipulator 5 erfassten Stückgüter 2 werden nachfolgend zur Unterscheidung von den in den Reihen 1* bzw. 1** angeordneten Stückgütern 2 mit der Bezugsziffer 2* bezeichnet. Beispielsweise greift der Manipulator 5 in mehreren zeitlich aufeinanderfolgenden Schritten mindestens ein, wahlweise jedoch auch zwei oder drei nacheinander angeordnete der in der Reihe 1** und mit konstanter Transportgeschwindigkeit v3 einlaufenden Stückgüter 2, 2*, trennt diese von der einreihigen Reihe 1** der Stückgüter 2 ab und überführt das abgetrennte Stückgut 2* bzw. die abgetrennte Gruppe von zwei oder drei lückenlos in Reihe angeordneten Stückgütern 2* in eine Zielposition P und/oder Zielausrichtung. Dabei kann vorgesehen sein, dass das Stückgut 2* bzw. die Gruppe von Stückgütern 2* seitlich gegenüber der einlaufenden Reihe 1** mit weiteren Stückgütern 2 verschoben wird und/oder dass das erfasste Stückgut 2* bzw. die erfasste Gruppe von Stückgütern 2* durch den Manipulator 5 in Transportrichtung TR von der nachrückenden Reihe 1** der Stückgüter 2 beabstandet wird. Zusätzlich kann bei dem erfindungsgemäßen Verfahren vorgesehen sein, dass das Stückgut 2* bzw. die Gruppe von Stückgütern 2* gegenüber den Stückgütern 2 der Reihe 1** verdreht wird.

Während der Positionierung der vom Manipulator 5 erfassten Stückgüter 2* werden die Transporteinrichtung 3, der Transportabschnitt 3* und die Horizontalfördereinrichtung 6 weiterhin konstant betrieben. Insbesondere werden die Stückgüter 2 der Reihen 1* und 1** sowie die bereits in der Zielposition P angeordneten Stückgüter 2* unterbrechungsfrei und/oder mit unveränderter Transportgeschwindigkeit v3 auf dem Transportabschnitt 3* bzw. mit unveränderter Geschwindigkeit v6 auf der Horizontalfördereinrichtung 6 weiter transportiert.

Der Manipulator 5 besitzt vorzugsweise eine bestimmte Aufnahmekapazität für mehrere Stückgüter 2, 2* (vergleiche Figuren 2 und zugehörige Beschreibung). Jedoch ist außerdem vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Reihe 1** definierter Länge erfasst. Dies wird insbesondere über eine Steuereinrichtung (nicht dargestellt) kontrolliert und/oder geregelt. Die Anzahl der erfassten Stückgüter 2 bzw. 2* variiert hierbei zwischen eins und der maximalen Anzahl gemäß der Aufnahmekapazität des Manipulators 5.

Die Figuren 10 bis 16 zeigen eine sich vom ersten Ausführungsbeispiel im Wesentlichen durch den getakteten Zulauf unterscheidende zweite Ausführungsvariante des Verfahrens in unterschiedlichen Verfahrensschritten zum Umgang mit in mindestens einer Reihe 1* bzw. 1** hintereinander bewegten Stückgütern 2, beispielsweise bei der Bildung einer palettierfähigen Lage oder einer Vorgruppierung für eine palettierfähige Lage aus Stückgütern 2, wobei in den dargestellten Verfahrensschritten ein Abgreifen von einem oder von zwei zuvorderst in der Reihe 1** angeordneten Stückgütern 2 durch einen Manipulator 5 erfolgt, der eine maximale Aufnahmekapazität von drei Stückgütern 2 bzw. 2* aufweist. Die nicht durch den Manipulator 5 erfassten Stückgüter 2 der Reihe 1** werden im Erfassungsbereich 4 des Manipulators 5 ohne Unterbrechung und mit unveränderter Geschwindigkeit v6 weitertransportiert.

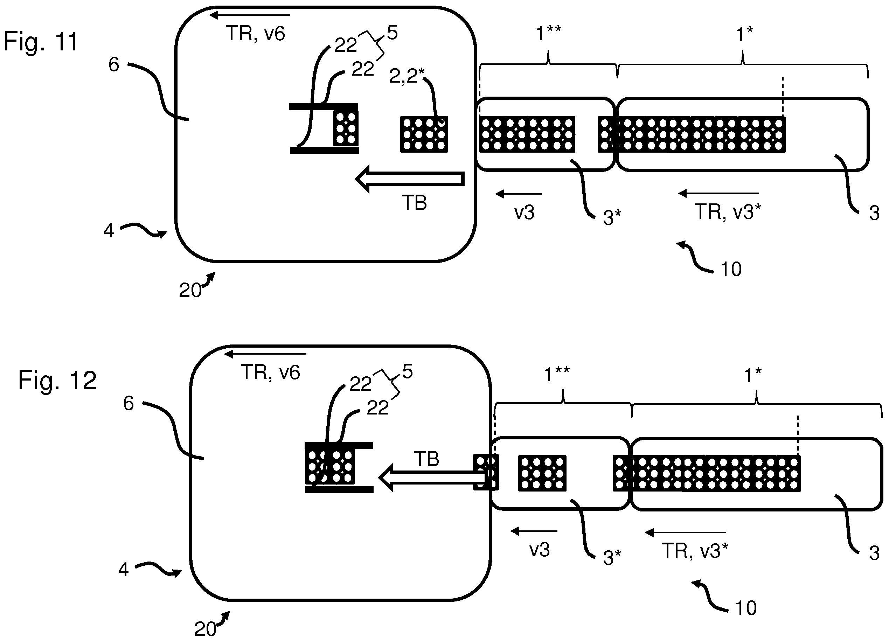

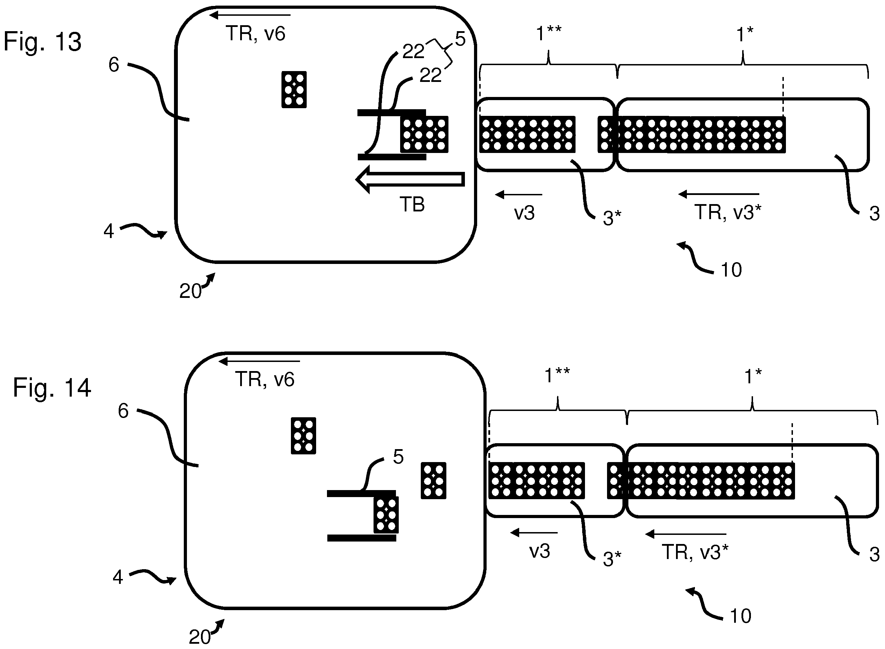

In den in den Figuren 9 bis 16 beispielhaft dargestellten Verfahrensschritten werden unterschiedliche Gruppen von nur einem Stückgut 2 (Figur 11) oder von zwei durch den Manipulator 5 asymmetrisch gegriffenen Stückgütern 2, 2* auf jeweils unterschiedliche Zielpositionen, insbesondere rechts von einer Flucht der Transporteinrichtung 3 befördert, dabei jedoch nicht gleichzeitig gedreht (vgl. Figur 13 ff). Hierbei kann wahlweise vorgesehen sein, dass der Manipulator 5 die zwei asymmetrisch erfassten Stückgüter 2* beispielsweise anhebt, zur jeweiligen Zielposition befördert und auf der Horizontalfördereinrichtung 6 innerhalb des Erfassungsbereiches 4 wieder absetzt. Alternativ kann vorgesehen sein, dass der Manipulator 5 die zwei Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt.

Vorzugsweise werden die zwei asymmetrisch erfassten Stückgüter 2* hierbei in einem einzigen, insbesondere unterbrechungsfreien, Manipulationsschritt in die Zielposition und/oder -ausrichtung überführt, geschoben und dabei entsprechend gedreht. Insbesondere werden die zwei asymmetrisch erfassten Stückgüter 2* in eine Position gebracht, so dass die in mehreren zeitlich aufeinander folgenden Verfahrensschritten manipulierten und in jeweilige Zielpositionen gebrachten Stückgüter 2* eine palettierfähige Lage oder eine Vorgruppierung für eine palettierfähige Lage bilden.

Bei den hier beschriebenen Manipulationsschritten ist insbesondere vorgesehen, dass sich der Manipulator 5 zumindest beim asymmetrischen Erfassen der zwei Stückgüter 2* und bei deren Freigabe in der Zielposition und Zielausrichtung mit einer Geschwindigkeit bewegt, die annähernd bzw. exakt der Transportgeschwindigkeit v3 entspricht, mit der sich die Reihe 1** der Stückgüter 2 nach ihrer Beschleunigung bei Übernahme auf den Transportabschnitt 3* bewegt bzw. die der Geschwindigkeit v6 entspricht, mit der sich die Horizontalfördereinrichtung 6 bewegt.

Nachdem die Stückgüter 2* ihre jeweilige Zielposition erreicht haben und sich der Manipulator 5 jeweils von diesen gelöst hat, werden die Stückgüter 2* in Transportrichtung TR und in Geschwindigkeit v6 auf der Horizontalfördereinrichtung 6 weiterbewegt. Die jeweilige Zielposition ist insbesondere eine Relativposition zu den nachfolgenden, nicht vom Manipulator 5 in ihrer Position veränderten Stückgütern 2. Da bei der hier beschriebenen Ausführungsform die Geschwindigkeit v6 der Horizontalfördereinrichtung 6 der Transportgeschwindigkeit v3* des Transportabschnittes 3* entspricht, und da die Transportrichtung TR der Transporteinrichtung 3, des Transportabschnittes 3* und der Horizontalfördereinrichtung 6 ebenfalls korrespondieren, werden die durch den Manipulator 5 in ihrer Position und/oder Ausrichtung veränderten Stückgüter 2* bei und/oder unmittelbar nach Erreichen ihrer Zielposition ohne Unterbrechung und/oder Geschwindigkeits- und/oder Richtungsänderung weitertransportiert.

Die Aufnahmeposition des Manipulators 5 kann entsprechend der Anzahl der abzugreifenden / abzuteilenden Stückgüter 2* verschoben und/oder der Manipulator 5 entsprechend der Positionen der zu erfassenden Stückgüter 2* aktiviert werden. Die auf der zu bildenden Lage benötigten Produktgruppen werden somit während des Manipulationsschritts, der einen Gruppierprozess und einen Positionierprozess in einem einzigen Verfahrensschritt vereint, gebildet.

Die Transportgeschwindigkeit v3 des Transportabschnittes 3* bzw. die Geschwindigkeit v6 der Horizontalfördereinrichtung 6 sind dabei so gewählt, dass der Manipulator 5 innerhalb des ihm zur Verfügung stehenden Arbeitsbereichs bzw. Erfassungsbereichs 4 ausreichend Zeit hat, um die Stückgüter 2* zu verschieben und/oder zu drehen. Bevorzugt besteht der Manipulator 5 aus einem Deltakinematik-Roboter, um hoch dynamische Verschiebebewegungen der wenigstens zwei zeitlich aufeinanderfolgenden Schritte zu realisieren und möglichst schnelle Taktzeiten zu ermöglichen.

Vor dem Einleiten einer Drehung des Manipulators 5 kann dieser beispielsweise zusammen mit den erfassten Stückgütern 2* zumindest kurzfristig gegenüber den Stückgütern 2 der Reihe 1** beschleunigt werden, um die vom Manipulator 5 erfassten Stückgüter 2* zumindest geringfügig von den nachfolgenden Stückgütern 2 der Reihe 1** abzutrennen.

Bei dem hier beschriebenen Ausführungsbeispiel des Verfahrens werden die Gruppen an Stückgütern 2* gemäß der jeweils zu bildenden Anordnung während des Gruppier- / Positionierprozesses zusammengestellt bzw. gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

**Bezugszeichenliste**

| 1,1*,1** | Reihe |
|---|---|
| 2,2* | Stückgut |
| 3 | Transporteinrichtung |
| 3* | Transportabschnitt |
| 4 | Erfassungsbereich |
| 5 | Manipulator |
| 6 | Horizontalfördereinrichtung |
| 10 | Handhabungsvorrichtung |
| 20 | Gruppiermodul |
| 22 | Klemmbacken |
| | |
| F | Formation |
| L,L2;L22,LR | Länge |
| P | Zielposition |
| S2*, S5 | Symmetrieebene |
| TB | Bewegungsbahn |
| TR | Transportrichtung |
| v3,v3* | Transportgeschwindigkeit |
| v6 | Geschwindigkeit |

**Patentansprüche**

1. Verfahren zum Umgang mit hintereinander bewegten Stückgütern (2), die lückenlos, in geschlossener Formation (F) zu einem Erfassungsbereich (4) eines Manipulators (5) transportiert werden, wobei

   - im Erfassungsbereich (4) ein transportiertes Stückgut (2) oder eine Gruppe umfassend wenigstens zwei transportierte Stückgüter (2) mittels mindestens zwei, dem wenigstens einen Manipulator (5) zugeordneten, gegenüberliegend angeordneten Klemm- und/oder Greifmitteln (22) klemmend und/oder kraft- und/oder formschlüssig erfasst, von nachfolgenden Stückgütern (2) der geschlossenen Formation (F) räumlich abgetrennt und in eine definierte relative Zielposition (P) und/oder Zielausrichtung gegenüber den jeweils nachfolgenden Stückgütern (2) der geschlossenen Formation (F) gebracht wird,
   - **dadurch gekennzeichnet, dass** durch das eine erfasste Stückgut (2) oder durch die erfasste Gruppe definierte erste vertikale und in etwa senkrecht zu einer Transportrichtung (TR) der Stückgüter (2) orientierte Symmetrieebene (S2*) beabstandet ist von einer hierzu in etwa parallel ausgerichteten zweiten vertikalen Symmetrieebene (S5), die durch den Manipulator (5) bzw. durch dessen Klemm- und/oder Greifmittel (22) definiert ist.

2. Verfahren nach Anspruch 1, bei dem

   - in mehreren zeitlich aufeinanderfolgenden Schritten jeweils wenigstens ein transportiertes Stückgut (2) von der geschlossenen Formation (F) erfasst und in eine jeweilige definierte relative Zielposition (P) und/oder Zielausrichtung gegenüber nachfolgenden Stückgütern (2) der geschlossenen Formation (F) gebracht wird,
   - woraus resultierend aus den in zeitlich aufeinanderfolgenden Schritten in ihre jeweilige Zielposition (P) und/oder Zielausrichtung gebrachten Stückgütern (2) eine palettierfähige Lage oder eine Vorgruppierung für eine palettierfähige Lage gebildet wird und/oder
   - woraus resultierend aus den in zeitlich aufeinanderfolgenden Schritten in ihre jeweilige Zielposition (P) und/oder Zielausrichtung gebrachten Stückgütern (2) zwei oder mehr weiterverarbeitbare und/oder einer Verpackungsstation zuführbare bzw. jeweils oder gemeinsam palettierfähige Reihen mit Stückgütern (2) gebildet wird, wobei einzelne, mehrere oder alle Stückgüter (2) jeweils verdreht werden können, insbesondere um jeweils einen Drehwinkel um eine Vertikale von mindestens 90°.

3. Verfahren nach Anspruch 2, bei welchem zum Bilden der palettierfähigen Lage oder der Vorgruppierung für eine palettierfähige Lage bei wenigstens einem der zeitlich aufeinanderfolgenden Schritte zumindest näherungsweise zeitgleich wenigstens zwei Stückgüter (2) von der geschlossenen Formation (F) erfasst und gemeinsam in ihre jeweilige definierte relative Zielposition (P) und/oder Zielausrichtung gegenüber den nachfolgenden Stückgütern (2) der geschlossenen Formation (F) gebracht werden.

4. Verfahren nach Anspruch 2 oder Anspruch 3, bei dem zum Bilden der palettierfähigen Lage oder der Vorgruppierung für eine palettierfähige Lage bei wenigstens zwei oder mehr zeitlich aufeinanderfolgenden Schritten eine unterschiedliche Anzahl an Stückgütern (2) von der geschlossenen Formation (F) erfasst und in eine jeweilige definierte relative Zielposition (P) und/oder Zielausrichtung gegenüber nachfolgenden Stückgütern (2) der geschlossenen Formation (F) gebracht werden.

**5.** Verfahren nach Anspruch 2, bei dem zum Bilden der palettierfähigen Lage oder der Vorgruppierung für eine palettierfähige Lage bei wenigstens zwei oder mehr zeitlich aufeinanderfolgenden Schritten jeweils immer ein einzelnes Stückgut (2) von der geschlossenen Formation (F) erfasst und in eine jeweilige definierte relative Zielposition (P) und/oder Zielausrichtung gegenüber nachfolgenden Stückgütern (2) der geschlossenen Formation (F) gebracht wird.

**6.** Verfahren nach einem der Ansprüche 3 bis 5, bei dem in den wenigstens zwei zeitlich aufeinanderfolgenden Schritten jeweils ein zuvorderst transportiertes Stückgut (2) oder mehrere zuvorderst transportierte Stückgüter (2) von mehreren in geschlossener Formation (F) transportierten Stückgütern (2) erfasst werden.

**7.** Verfahren nach einem der Ansprüche 1 bis 6, bei dem die wenigstens zwei zeitlich aufeinanderfolgenden Schritte über einen bestimmten, als Deltakinematik- Roboter (42) ausgebildeten Manipulator (5) oder einen Teil eines Deltakinematik-Roboters (42) bildenden Manipulators (5) umgesetzt werden.

**8.** Verfahren nach einem der Ansprüche 1 bis 7, bei dem die jeweilige Anzahl an Stückgütern (2) in den wenigstens zwei zeitlich aufeinanderfolgenden Schritten jeweils durch mindestens zwei sich gegenüberliegende bewegliche Klemm- und/oder Greifmittel (22) des Manipulators (5) klemmend und/oder kraft- und/oder formschlüssig erfasst und nach Verbringen in ihre jeweilige definierte Zielposition (P) durch Öffnen der mindestens zwei sich gegenüberliegenden Klemm- und/oder Greifmittel (22) freigegeben werden.

**9.** Verfahren nach einem der Ansprüche 1 bis 8, bei dem jeweils nicht erfasste Stückgüter (2) von verbleibenden in geschlossener Formation (F) bewegten Stückgütern (2) während der klemmenden und/oder kraft- und/oder formschlüssigen Erfassung, der räumlichen Abtrennung des wenigstens einen Stückgutes (2) von der geschlossenen Formation (F) und/oder und der Überführung des wenigstens einen erfassten Stückgutes (2) in eine definierte relative Zielposition (P) und/oder Zielausrichtung unterbrechungsfrei und/oder mit unveränderter Transportgeschwindigkeit weitertransportiert werden.

**10.** Verfahren nach einem der Ansprüche 1 bis 9, bei dem das wenigstens eine Stückgut (2) bei und/oder unmittelbar nach Erreichen seiner Zielposition (P) und/oder Zielausrichtung ohne Unterbrechung und/oder Geschwindigkeits- und/oder Richtungsänderung weitertransportiert wird.

**11.** Verfahren nach einem der Ansprüche 1 bis 10, bei welchem dem wenigstens einem erfassten Stückgut (2) gegenüber einer Transportgeschwindigkeit (v3) wenigstens eine weitere Geschwindigkeits- und/oder Richtungskomponente aufgeprägt wird.

**Claims**

**1.** A method for handling piece goods (2) that are being moved one after another, the piece goods (2) being transported unspaced in a closed formation (F) to a seizing range (4) of a manipulator (5), wherein

- a transported piece good (2) or a group comprising at least two transported piece goods (2) is seized in a clamping and/or force-locking and/or form-locking manner in the seizing range (4) by at least two clamping means and/or gripping means (22) located opposite each other and assigned to the at least one manipulator (5), is spatially separated from subsequent piece goods (2) of the closed formation (F), and is brought into a defined relative target position (P) and/or target alignment in relation to the in each instance subsequent piece goods (2) of the closed formation (F),
- **characterised in that** a first vertical symmetry plane (S2*), which is defined by the seized piece good (2) or by the seized group, and which is oriented approximately perpendicular to a transport direction (TR) of the piece goods (2), is spaced apart from a second vertical symmetry plane aligned approximately parallel thereto, with the second vertical symmetry plane (S5) being defined by the manipulator (5) or by the manipulator clamping means and/or gripping means (22), as applicable.

**2.** The method according to claim 1, in which

- in each instance at least one transported piece good (2) is seized from the closed formation (F) in a plurality of temporally consecutive steps and is brought into a particular specified relative target position (P) and/or target alignment in relation to subsequent piece goods (2) of the closed formation (F),
- with the result that a palletisable layer or a pregroup for a palletisable layer is formed from the piece goods (2) that have been brought into their particular target position (P) and/or target alignment in temporally consecutive steps,

and/or

- with the result that two or more rows of piece goods (2) that are further processable and/or suppliable to a packaging station or that are palletisable each individually or together, as applicable, are formed from the piece goods (2) that have been brought into their particular target position (P) and/or target alignment in temporally consecutive steps, wherein individual, a plurality of, or all piece goods (2) can in each instance be rotated, in particular, in each instance by a rotation angle of at least 90° about a vertical.

3. The method according to claim 2, in which, for the purpose of forming the palletisable layer or the pre-group for a palletisable layer, at least two piece goods (2) are seized at least approximately simultaneously from the closed formation (F) in at least one of the temporally consecutive steps and are brought together into their particular specified relative target position (P) and/or target alignment in relation to the subsequent piece goods (2) of the closed formation (F).

4. The method according to claim 2 or claim 3, in which, for the purpose of forming the palletisable layer or the pre-group for a palletisable layer, a different number of piece goods (2) is seized from the closed formation (F) in at least two or more temporally consecutive steps and is brought into a particular specified relative target position (P) and/or target alignment in relation to the subsequent piece goods (2) of the closed formation (F).

5. The method according to claim 2, in which, for the purpose of forming the palletisable layer or the pre-group for a palletisable layer, in each instance always one individual piece good (2) is seized from the closed formation (F) in at least two or more temporally consecutive steps and is brought into a particular specified relative target position (P) and/or target alignment in relation to the subsequent piece goods (2) of the closed formation (F).

6. The method according to one of the claims 3 to 5, in which in each instance one foremost transported piece good (2) or a plurality of foremost transported piece goods (2) of a plurality of piece goods (2) that are being transported in closed formation (F) are seized in the at least two temporally consecutive steps.

7. The method according to one of the claims 1 to 6, in which the at least two temporally consecutive steps are carried out by way of a specific manipulator (5) designed as delta kinematic robot (42) or by way of a manipulator (5) forming a part of delta kinematic robot (42).

8. The method according to one of the claims 1 to 7, in which the particular number of piece goods (2) is in each instance seized in a clamping and/or force-locking and/or form-locking manner in the at least two temporally consecutive steps by at least two movable manipulator (5) clamping means and/or gripping means (22) located opposite each other, and is released, after having been brought into the particular specified target position (P), by the at least two clamping means and/or gripping means (22) located opposite each other opening up.

9. The method according to one of the claims 1 to 8, in which non-seized piece goods (2) of the remaining piece goods (2) that are being moved in closed formation (F) are in each instance transported further interruption-free and/or at unchanged transport speed during the seizing in a clamping and/or force-locking and/or form-locking manner, during the spatial separation of the at least one piece good (2) from the closed formation (F), and/or during the transfer of the at least one seized piece good (2) into a specified relative target position (P) and/or target alignment.

10. The method according to one of the claims 1 to 9, in which the at least one piece good (2) is transported further, without interruption and/or without speed change and/or direction change, upon and/or immediately after reaching its target position (P) and/or target alignment.

11. The method according to one of the claims 1 to 10, in which at least one further velocity component and/or direction component in relation to a transport speed (v3) is imparted to the at least one seized piece good (2).

## Revendications

1. Procédé de manipulation de produits de détail (2) déplacés les uns derrière les autres qui sont transportés sans lacunes, en formation fermée (F), vers une zone de saisie (4) d'un manipulateur (5), dans lequel

- dans la zone de saisie (4), un produit de détail (2) transporté ou un groupe comprenant au moins deux produits de détail (2) transportés est saisi par serrage et/ou par adhérence et/ou à engagement positif par l'intermédiaire d'au moins deux moyens de serrage et/ou de préhension (22) qui sont associés audit au moins un manipulateur (5) et sont agencés en vis-à-vis l'un de l'autre, est séparé spatialement de produits de détail (2) suivants de la formation fermée (F) et est amené dans une position cible (P) et/ou orientation cible relative(s) définie(s) par rapport aux produits de détail (2) respectivement suivants de la formation fermée (F),

- **caractérisé par le fait qu'**un premier plan de symétrie vertical (S2*) qui est défini par ledit un produit de détail (2) saisi ou le groupe saisi et qui est orienté à peu près perpendiculairement à une direction de transport (TR) des produits de détail (2) est espacé d'un deuxième plan de symétrie vertical (S5) qui est orienté à peu près parallèlement à celui-ci et qui est défini par le manipulateur (5) ou bien par les moyens de serrage et/ou de préhension (22) de ce dernier.

2. Procédé selon la revendication 1, dans lequel

    - dans plusieurs étapes se suivant dans le temps, respectivement au moins un produit de détail (2) transporté est saisi dans la formation fermée (F) et est amené dans une position cible (P) et/ou orientation cible relative(s) définie(s) respective(s) par rapport à des produits de détail (2) suivants de la formation fermée (F),
    - d'où résulte qu'une couche palettisable ou un pré-groupement pour une couche palettisable est formé(e) à partir des produits de détail (2) amenés dans leur position cible (P) et leur orientation cible respective(s) dans des étapes se suivant dans le temps

    et/ou

    - d'où résulte que deux ou plusieurs rangées de produits de détail (2) qui peuvent être traitées ultérieurement et/ou être amenées à un poste d'emballage ou sont chacune ou ensemble aptes à être palettisées sont formées à partir des produits de détail (2) amenés dans leur position cible (P) et leur orientation cible respective(s) dans des étapes se suivant dans le temps, dans lequel des produits de détail (2) individuels, plusieurs ou l'ensemble de ceux-ci peuvent chacun être tournés, en particulier d'un angle de rotation autour d'une verticale d'au moins 90° respectivement.

3. Procédé selon la revendication 2, dans lequel, pour former la couche palettisable ou le pré-groupement pour une couche palettisable, dans au moins l'une des étapes se suivant dans le temps, au moins deux produits de détail (2) sont saisis au moins approximativement en même temps dans la formation fermée (F) et sont amenés ensemble dans leur position cible (P) et/ou orientation cible relative(s) définie(s) respective(s) par rapport aux produits de détail (2) suivants de la formation fermée (F).

4. Procédé selon la revendication 2 ou la revendication 3, dans lequel, pour former la couche palettisable ou le pré-groupement pour une couche palettisable, dans au moins deux ou plusieurs étapes se suivant dans le temps, un nombre différent de produits de détail (2) est saisi dans la formation fermée (F) et est amené dans une position cible (P) et/ou orientation cible relative(s) définie(s) respective(s) par rapport à des produits de détail (2) suivants de la formation fermée (F).

5. Procédé selon la revendication 2, dans lequel, pour former la couche palettisable ou le pré-groupement pour une couche palettisable, dans au moins deux ou plusieurs étapes se suivant dans le temps, respectivement toujours un produit de détail (2) individuel est saisi dans la formation fermée (F) et est amené dans une position cible (P) et/ou orientation cible relative(s) définie(s) respective(s) par rapport à des produits de détail (2) suivants de la formation fermée (F).

6. Procédé selon l'une quelconque des revendications 3 à 5, dans lequel respectivement un produit de détail (2) transporté en premier ou plusieurs produits de détail (2) transportés en premier, parmi une pluralité de produits de détail (2) transportés en formation fermée (F), est/sont saisi(s) dans lesdites au moins deux étapes se suivant dans le temps.

7. Procédé selon l'une quelconque des revendications 1 à 6, dans lequel lesdites au moins deux étapes se suivant dans le temps sont mises en oeuvre par un manipulateur (5) spécifique et conçu en tant que robot delta cinématique (42) ou par un manipulateur (5) formant une partie d'un robot delta cinématique (42).

8. Procédé selon l'une quelconque des revendications 1 à 7, dans lequel, dans lesdites au moins deux étapes se suivant dans le temps, le nombre respectif de produits de détail (2) sont saisis par serrage et/ou par adhérence et/ou à engagement positif respectivement par au moins deux moyens de serrage et/ou de préhension (22) opposés dudit manipulateur (5) et sont libérés après qu'ils ont été amenés dans leur position cible (P) définie respective en ouvrant lesdits au moins deux moyens de serrage et/ou de préhension opposés.

9. Procédé selon l'une quelconque des revendications 1 à 8, dans lequel des produits de détail (2) respectivement non saisis de produits de détail (2) restants déplacés en formation fermée (F) sont transportés sans interruptions et/ou à une vitesse de transport inchangée pendant que ledit au moins un produit de détail (2) est saisi par serrage et/ou par adhérence et/ou à engagement positif, est séparé spatialement de la formation fermée (F) et/ou que ledit au moins un produit de détail (2) saisi est transféré dans une position cible (P) et/ou une orientation cible relative(s) définie(s).

**10.** Procédé selon l'une quelconque des revendications 1 à 9, dans lequel ledit au moins un produit de détail (2) est transporté sans interruptions et/ou sans changement de vitesse et/ou de direction lorsqu'il atteint sa position cible (P) et/ou orientation cible et/ou immédiatement après avoir atteint celle(s)-ci.

**11.** Procédé selon l'une quelconque des revendications 1 à 10, dans lequel au moins une autre composante de vitesse et/ou de direction est imposée audit au moins un produit de détail (2) saisi, par rapport à une vitesse de transport (v3).

Fig. 1

1, F

TR, v3

10

3

2

TB

5

22

22

TR, v6

6

20

4

Fig. 2

(A) S5 · ein 2* · S2* · 22 · 5

(B) S5 · zwei 2* · S2* · 5

(C) S5=S2* · drei 2* · L · 5

(D) L22 · ein 2* · 22 · LR · L2 · 5

(E) L22 · zwei 2* · LR · L2 · L2 · 5

(F) L22 · drei 2* · L2 · L2 · L2 · 5

EP 3 445 683 B1

Fig. 3

6

5    2,2*

TR, v6

4

20

P

TB

2    TR, v3    3

1,F

10

Fig. 4

6

5    2,2*

TR, v6

4

20

TB

2    TR, v3    3

1,F

10

EP 3 445 683 B1

Fig. 5

Fig. 6

EP 3 445 683 B1

Fig. 7

Fig. 8

EP 3 445 683 B1

Fig. 9

Fig. 10

EP 3 445 683 B1

Fig. 11

Fig. 12

Fig. 13

Fig. 14

EP 3 445 683 B1

Fig. 15

Fig. 16

EP 3 445 683 B1

**EP 3 445 683 B1**

**IN DER BESCHREIBUNG AUFGEFÜHRTE DOKUMENTE**

**In der Beschreibung aufgeführte Patentdokumente**

- EP 1456101 A2
- US 5123231 A
- EP 1927559 A1
- US 20050246056 A1
- EP 2107018 A1
- DE 102011080812 A1
- DE 102009026220 A1
- DE 102009043970 A1
- DE 102010020847 A1
- JP H052843 U
- DE 102011087052 A1
- WO 2010106529 A1
- EP 2246277 A
- WO 2014145412 A2
- FR 2993870 A1